# EUROPÄISCHE PATENTSCHRIFT

(11) **EP 2 134 178 B1**
(45) Veröffentlichungstag und Bekanntmachung des Hinweises auf die Patenterteilung: **06.08.2014**
(21) Anmeldenummer: 08735078.1
(22) Anmeldetag: 08.04.2008
(51) Int. Cl.: A01N 43/56, C12N 15/82

(54) **VERFAHREN ZUR VERBESSERTEN NUTZUNG DES PRODUKTIONSPOTENTIALS TRANSGENER PFLANZEN**
METHOD FOR BETTER UTILISING THE PRODUCTION POTENTIAL OF TRANSGENIC PLANTS
PROCÉDÉ D'AMÉLIORATION DE L'EXPLOITATION DU POTENTIEL DE PRODUCTION DE PLANTES TRANSGÉNIQUES

(30) Priorität: 17.04.2007 DE 102007018452
(43) Veröffentlichungstag der Anmeldung: 23.12.2009
(73) Patentinhaber: Bayer CropScience Aktiengesellschaft, 40789 Monheim (DE)
(72) Erfinder: ANDERSCH, Wolfram, 51469 Bergisch Gladbach (DE); FUNKE, Christian, 42799 Leichlingen (DE); HUNGENBERG, Heike, 40764 Langenfeld (DE); THIELERT, Wolfgang, 51519 Odenthal (DE)
(74) Vertreter: BIP Patents
(86) Internationale Anmeldenummer: PCT/EP2008/002759
(87) Internationale Veröffentlichungsnummer: WO 2008/125245

(56) Entgegenhaltungen:
- WO-A-2005/048711
- WO-A-2005/107468
- WO-A-2006/007595
- WO-A-2006/068669

## Beschreibung

Die Erfindung betrifft ein Verfahren zur Verbesserung der Wirkung einer Mischung.

Der Anteil transgener Pflanzen in der Landwirtschaft ist in den letzten Jahren deutlich gestiegen, wenn auch regionale Unterschiede derzeit noch erkennbar sind. So hat sich beispielsweise der Anteil an transgenem Mais in den USA seit 2001 von 26% auf 52% verdoppelt, während transgener Mais in Deutschland bisher kaum eine praktische Rolle spielt. In anderen europäischen Ländern, beispielsweise in Spanien, liegt der Anteil an transgenem Mais aber bereits bei etwa 12%.

Transgene Pflanzen werden vor allem eingesetzt, um das Produktionspotential der jeweiligen Pflanzensorte bei möglichst geringem Einsatz von Produktionsmitteln möglichst günstig zu nutzen. Die genetische Veränderung der Pflanzen zielt dazu vor allem darauf ab, in den Pflanzen eine Resistenz gegen bestimmte Schädlinge oder Schadorganismen oder aber auch Herbizide sowie gegen abiotischen Stress (beispielsweise Dürre, Hitze oder erhöhte Salzgehalte) zu erzeugen. Ebenso kann eine Pflanze genetisch modifiziert werden, um bestimmte Qualitäts- oder Produktmerkmale, wie z.B. den Gehalt an ausgewählten Vitaminen oder Ölen, zu erhöhen oder bestimmte Fasereigenschaften zu verbessern.

Eine Herbizidresistenz bzw. -toleranz kann beispielsweise durch den Einbau von Genen in die Nutzpflanze zur Expression von Enzymen zur Detoxifikation bestimmter Herbizide erreicht werden, die somit selbst in Gegenwart dieser Herbizide zur Bekämpfung von Unkräutern und Ungräsern möglichst ungehindert wachsen können. Als Beispiele seien Baumwoll-Sorten bzw. Mais-Sorten genannt, die den herbiziden Wirkstoff Glyphosate (Roundup®), (Roundup Ready®, Monsanto) oder die Herbizide Glufosinate oder Oxynil tolerieren.

In jüngerer Zeit wurden zudem Nutzpflanzen entwickelt, die zwei oder mehrere genetische Veränderungen enthalten ("stacked transgenic plants" oder mehrfach-transgene Kulturen). So hat beispielsweise die Firma Monsanto mehrfach-transgene Maissorten entwickelt, die gegen den Maiszünsler (*Ostrinia nubilalis*) und den Maiswurzelbohrer (*Diabrotica virgifera*) resistent sind. Ebenso sind Mais- oder Baumwollkulturen bekannt, die sowohl gegen den Maiswurzelbohrer bzw. den Baumwollkapselwurm resistent sind als auch das Herbizid Roundup® tolerieren.

Es hat sich nunmehr gezeigt, dass sich die Wirkung einer Mischung gegen Schädlinge wie in Tabelle 2 für cry1Ab und cry1Ac aufgeführt nochmals verbessern läßt, wenn Bt Pflanzen mit einer Mischung aus einem Wirkstoff der Formel (I) und einem Wirkstoff aus der Gruppe II behandelt werden. Dabei schließt der Begriff "Behandlung" alle Maßnahmen ein, die zu einem Kontakt zwischen diesen Wirkstoffmischungen und mindestens einem Pflanzenteil führen. Unter "Pflanzenteilen" sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Saatgut.

Es ist bereits bekannt, dass Verbindungen der Formel (I) eine insektizide Wirkung aufweisen (z.B. aus WO 03/015519 und WO 04/067528) und in Mischungen eingesetzt werden können (z.B. aus WO 05/048711, WO 05/107468, WO 06/007595, WO 06/068669). Auf diese Dokumente wird hiermit ausdrücklich Bezug genommen.

Die erfindungsgemäß einsetzbaren Mischungen weisen einen Wirkstoff der Formel (I) wie folgt auf: 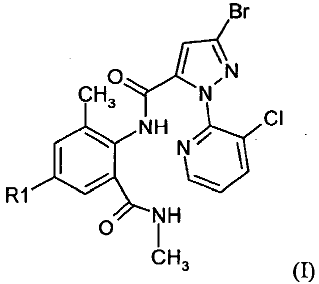 wobei
R1 für Cl oder Cyano steht

Und mindestens einen der folgenden Wirkstoffe aus der Gruppe II, enthaltend Abamectin oder Spinosad.

Bevorzugt sind Mischungen, welche den Wirkstoff der Formel (I-1) aufweisen 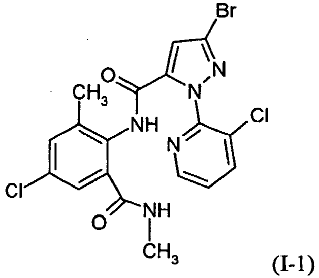 und mindestens einen der Wirkstoffe aus der Gruppe II, enthaltend Abamectin oder Spinosad.

Ebenso bevorzugt sind Mischungen, welche den Wirkstoff der Formel (I-2) aufweisen 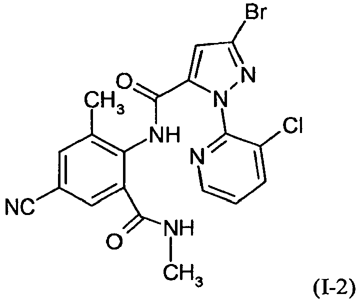 und mindestens einen der Wirkstoffe aus der Gruppe II, enthaltend

Die Wirkstoffkombinationen können darüber hinaus auch weitere fungizid, akarizid oder insektizid wirksame Zumischpartner enthalten.

Im Allgemeinen enthalten die erfindungsgemäßen Mischungen einen Wirkstoff der Formel (I) und einen Wirkstoff aus der Gruppe (II) in den angegebenen bevorzugten und besonders bevorzugten Mischungsverhältnissen:

Das bevorzugte Mischungsverhältnis beträgt 250:1 bis 1:50.

Das besonders bevorzugte Mischungsverhältnis beträgt 25:1 bis 1:25.

Die Mischungsververhältnisse basieren auf Gewichtsverhältnissen. Das Verhältnis ist zu verstehen als Wirkstoff der Formel (I): Mischpartner aus der Gruppe (II).

Gemäß dem erfindungsgemäß vorgeschlagenen Verfahren werden transgene Bt-Pflanzen, insbesondere Nutzpflanzen mit den erfindungsgemäßen Mischungen behandelt, um die landwirtschaftliche Produktivität zu steigern. Bei transgenen Bt-Pflanzen im Sinne der Erfindung handelt es sich um Pflanzen, die mindestens ein "Fremdgen" cry1Ab oder cry1Ac enthalten.

Vielfältige Verfahren zur Herstellung transgener Pflanzen sowie Verfahren zur gezielten Mutagenese, zur Gentransformation und Klonierung sind dem Fachmann ohne weiteres bekannt, so beispielsweise aus: Willmitzer, 1993, Transgenic plants, In: Biotechnology, A Multivolume Comprehensive Treatise, Rehm et al. (eds.), Vol.2, 627-659, VCH Weinheim, Germany; McCormick et al., 1986, Plant Cell Reports 5 : 81-84; EP-A 0221044; EP-A 0131624, oder Sambrook et al., 1989, "Molecular Cloning: A Laboratory Manual", 3rd Ed., Cold Spring Harbor Laboratory Press, Cold Spring Harbor, NY; Winnacker, 1996, "Gene und Klone", 2. Aufl., VCH Weinheim oder Christou, 1996, Trends in Plant Science 1 : 423-431. Beispiele für Transit- oder Signalpeptide oder zeit- oder ortspezifische Promotoren sind z.B. in Braun et al., 1992, EMBO J. 11 : 3219-3227; Wolter et al., 1988, Proc. Natl. Acad. Sci. USA 85 : 846-850; Sonnewald et al., 1991, Plant J. 1 : 95-106 offenbart.

Ein Beispiel für eine komplexe genetische Manipulation einer Nutzpflanze ist die so genannte GURT-Technologie ("Genetic Use Restriction Technologies"), die der technischen Kontrolle der Vermehrung der jeweiligen transgenen Pflanzensorte dient. Dazu werden in der Regel zwei oder drei Fremdgene in die Nutzpflanze einkloniert, die in einem komplexen Wechselspiel nach der Gabe eines externen Stimulus eine Kaskade auslösen, die zum Absterben des sich anderenfalls entwickelnden Embryos führt. Der externe Stimulus (beispielsweise ein Wirkstoff oder ein anderer chemischer oder abiotischer Reiz) kann dazu beispielsweise mit einem Repressor interagieren, der damit nicht mehr die Expression einer Rekombinase unterdrückt, so dass die Rekombinase einen Inhibitor spalten kann und damit die Expression eines Toxins erlaubt, das das Absterben des Embryos bewirkt. Beispiele für diese Art der transgenen Pflanzen sind in US 5,723,765 oder US 5,808,034 offenbart.

Dem Fachmann sind demnach Verfahren zur Generierung transgener Pflanzen bekannt, die aufgrund der Integration regulatorischer Fremdgene und der damit ggf. vermittelten Überexpression, Suppression oder Inhibierung endogener Gene oder Gensequenzen oder der Existenz oder Expression von Fremdgenen oder deren Fragmente veränderte Eigenschaften aufweisen.

Wie bereits oben ausgeführt, ermöglicht das erfindungsgemäße Verfahren eine Verbesserung der Wirkung von Mischungen aus eiinem Wirkstoff der Formel (I) und mindestens einem weiteren Wirkstoff ausgewählt aus Abamectin bzw. Spinosad. Dies kann einerseits ggf. darauf zurückzuführen sein, dass die Aufwandmenge der erfindungsgemäß einsetzbaren Wirkstoffe reduziert werden kann; beispielsweise durch eine Verminderung der eingesetzten Dosis oder aber durch eine Reduktion der Anzahl der Applikationen. Andererseits kann ggf. der Ertrag der Nutzpflanzen quantitativ und/oder qualitativ gesteigert werden.

Diese synergistischen Wirkungen können je nach Pflanzenarten bzw. Pflanzensorten, deren Standort und Wachstumsbedingungen (Böden, Klima, Vegetationsperiode, Ernährung) variieren und können vielfältig sein. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, möglich, die über die eigentlich zu erwartenden Effekte hinausgehen.

Diese Vorteile sind auf eine erfindungsgemäß erreichte synergistische Wirkung zwischen den einsetzbaren erfindungsgemäßen Mischungen und dem jeweiligen Wirkprinzip der genetischen Veränderung der transgenen Pflanze zurückzuführen. Mit dieser durch den Synergismus bedingten Reduzierung der Produktionsmittel bei gleichzeitiger Ertrags- oder Qualitätserhöhung sind erhebliche ökonomische und ökologische Vorteile verbunden.

Eine Liste mit dem Fachmann bekannten Beispielen transgener Pflanzen unter Nennung der jeweils betroffenen Struktur in der Pflanze bzw. dem durch die genetische Veränderung exprimierten Protein in der Pflanze ist in **Tabelle 1** zusammengestellt. Darin ist der betroffenen Struktur bzw. dem exprimierten Prinzip jeweils eine bestimmte Merkmalsausprägung im Sinne einer Toleranz gegenüber einem bestimmten Streßfaktor zugeordnet. Eine ähnliche Liste **(Tabelle 3)** stellt - in etwas geänderter Anordnung - ebenso Beispiele von Wirkprinzipien, damit induzierten Toleranzen und möglichen Nutzpflanzen zusammen. Weitere Beispiele von transgenen Pflanzen sind in der **Tabelle 4** zusammengestellt.

Mischungen werden in dem erfindungsgemäßen Verfahren zur Behandlung transgener Pflanzen enthaltend mindestens ein Fremdgen cry1Ab oder cry1Ac, welches ein Bt-Toxin codiert, eingesetzt. Bei einem Bt-Toxin handelt es sich um ein ursprünglich aus dem Bodenbakterium *Bacillus thuringiensis* stammendes oder abgeleitetes Protein, das entweder der Gruppe der *crystal toxins (Cry)* oder der *cytolytic toxins (Cyt)* zugehörig ist. Sie werden in dem Bakterium ursprünglich als Protoxine gebildet und werden erst im alkalischen Milieu - beispielsweise im Verdauungstrakt bestimmter Fraßinsekten - zu ihrer aktiven Form metabolisiert. Dort bindet das dann aktive Toxin an bestimmte Kohlenwasserstoffstrukturen an Zelloberflächen und verursacht eine Porenbildung, die das osmotische Potential der Zelle zerstören und damit Zelllysis bewirken kann. Der Tod der Insekten ist die Folge. Bt-Toxine sind vor allem wirksam gegen bestimmte Schädlingsarten aus den Ordnungen der Lepidoptera (Schmetterlinge), Homoptera (Gleichflügler), Diptera (Zweiflügler) und Coleoptera (Käfer) in all ihren Entwicklungsstadien; also von der Eilarve über ihre juvenilen bis hin zu ihren adulten Formen.

Es ist seit langem bekannt, Gensequenzen codierend Bt-Toxine, Teile davon oder aber von Bt-Toxin abgeleitete Proteine oder Peptide mit Hilfe gentechnologischer Verfahren in landwirtschaftliche Nutzpflanzen einzuklonieren und somit transgene Pflanzen mit endogenen Resistenzen gegen Bt-Toxin empfindlichen Schädlinge zu erzeugen. Die mindestens ein Bt-Toxin oder daraus abgeleitete Proteine codierenden transgenen Pflanzen werden im Sinne der Erfindung als "Bt-Pflanzen" definiert.

Die "erste Generation" solcher Bt-Pflanzen enthielt in der Regel nur die Gene, die die Bildung eines bestimmten Toxins ermöglichten und somit nur gegen eine Gruppe von Schaderregern resistent machten. Beispiele für eine kommerziell erhältliche Mais-Sorte mit dem Gen zur Bildung des Cry1Ab Toxins ist "YieldGard®" von Monsanto, die gegen den Maiszünsler resistent ist. Die Resistenz gegen andere Schaderreger aus der Familie der Lepidopteren wird dagegen in der Bt-Baumwoll-Sorte (Bollgard®) durch Einklonieren der Gene zur Bildung des CrylAc Toxins erzeugt. Wiederum andere transgene Kulturpflanzen exprimieren Gene zur Bildung von Bt-Toxinen mit Wirkung gegen Schaderreger aus der Ordnung der Coleopteren. Als Beispiele dafür sei die Bt-Kartoffel-Sorte "NewLeaf®" (Monsanto) genannt, die das Cry3A Toxin bilden kann und somit gegen den Kartoffelkäfer ("Colorado Potatoe Beetle") resistent ist, bzw. die transgene Mais-Sorte "YieldGard®" (Monsanto), die das Cry 3Bb1 Toxin bilden und somit gegen verschiedene Arten des Maiswurzelbohrers geschützt ist.

In einer "zweiten Generation" wurden die oben bereits beschriebenen mehrfach-transgenen Pflanzen generiert, die mindestens zwei Fremdgene enthalten oder exprimieren.

Beschrieben sind hier transgene Pflanzen mit Bt-Toxinen aus der Gruppe der *Crγ*-Familie (siehe z.B. Crickmore et al., 1998, Microbiol. Mol. Biol. Rev. 62 : 807-812), die insbesondere wirksam sind gegen Lepidopteren, Coleopteren oder Dipteren. Beispiele für Gene codierend die Proteine sind:
cry1Aa1, cry1Aa2, cry1Aa3, cry1Aa4, cry1Aa5, cry1Aa6, cry1Aa7, cry1Aa8, cry1Aa9, cry1Aa10, cry1Aa11 cry1Ab1, crylAb2, crylAb3, cry1Ab4, cry1Ab5, cry1lAb6, crylAb7, cry1lAb8, crylAb9, cry1Ab10, cry1Ab11, cry1Ab12, cry1Ab13, cry1Ab14, cry1Ac1, crylAc2, cry1Ac3, crylAc4, crylAc5, crylAc6, crylAc7, cry1Ac8, cry1Ac9, cry1Ac10, cry1Ac11, cry1Ac12, cry1Ac13, cry1Ad1, crylAd2, cry1Ae1, cry1Af1, cry1Ag1, cry1Ba1, cry1Ba2, cry1Bb1, cry1Bc1, cry1Bd1, cry1Be1, cry1Ca1, crylCa2, cry1Ca3, crylCa4, cry1Ca5, cry1Ca6, cry1Ca7, cry1Cb1, crylCb2, cry1Da1, cry1Da2, cry1Db1, crylEal, cry1Ea2, crylEa3, crylEa4, cry1Ea5, cry1Ea6, cry1Eb1, cry1Fa1, cry1Fa2, cry1Fb1, cry1Fb2, cry1Fb3, cry1Fb4, cry1Ga1, crylGa2, cry1Gb1, cry1Gb2, cry1Ha1, cry1Hb1, cry1Ia1, cry1Ia2, cry1Ia3, cry1Ia4, cry1Ia5, cry1Ia6, cry1Ib1, cry1Ic1, cry1Id1, cry1Ie1, cry1I-like, cry1Ja1, crylJbl, cry1Jc1, cry1Ka1, cry1-like, cry2Aa1, cry2Aa2, cry2Aa3, cry2Aa4, cry2Aa5, cry2Aa6, cry2Aa7, cry2Aa8, cry2Aa9, cry2Ab1, cry2Ab2, cry2Ab3, cry2Acl, cry2Ac2, cry2Adl, cry3Aa1, cry3Aa2, cry3Aa3, cry3Aa4, cry3Aa5, cry3Aa6, cry3Aa7, cry3Ba1, cry3Ba2, cry3Bb1, cry3Bb2, cry3Bb3, cry3Cal, cry4Aa1, cry4Aa2, cry4Ba1, cry4Ba2, cry4Ba3, cry4Ba4, cry5Aa1, cry5Abl, cry5Acl, cry5Ba1, cry6Aa1, cry6Ba1, cry7Aa1, cry7Ab1, cry7Ab2, cry8Aa1, cry8Ba1, cry8Ca1, cry9Aa1, cry9Aa2, cry9Ba1, cry9Ca1, cry9Da1, cry9Da2, cry9Ea1, cry9 like, cry10Aa1, cry10Aa2, cry11Aa1, cry11Aa2, cry11Ba1, cry11Bb1, cry12Aa1, cry13Aa1, cry14Aa1, cry15Aa1, cry16Aa1, cry17Aa1, cry18Aa1, cry18Ba1, cry18Ca1, cry19Aa1, cry19Ba1, cry20Aa1, cry21Aa1, cry21Aa2, cry22Aa1, cry23Aa1, cry24Aa1, cry25Aa1, cry26Aa1, cry27Aa1, cry28Aa1, cry28Aa2, cry29Aa1, cry30Aa1, cry31Aa1, cyt1Aa1, cytlAa2, cytlAa3, cytlAa4, cyt1Ab1, cyt1Ba1, cyt2Aal, cyt2Ba1, cyt2Ba2, cyt2Ba3, cyt2Ba4, cyt2Ba5, cyt2Ba6, cyt2Ba7, cyt2Ba8, cyt2Bb1.

Erfindungsgemäß sind Gene oder Genabschnitte der Subfamilien cry1Ab und, cry1Ac.

Weiterhin bevorzugt ist es, Pflanzen einzusetzen, die neben den Genen für ein oder mehrere Bt-Toxine, für die cry1Ab oder cry1Ac codieren, ggf. auch Gene zur Expression beispielsweise eines Protease- bzw. Peptidase-Inhibitors (wie in WO-A 95/35031), von Herbizidresistenzen (z.B. gegen Glufosinate oder Glyphosate durch Expression des pat- oder bar-Gens) oder zur Ausbildung von Nematoden-, Pilz- oder Virusresistenzen (z.B. durch Expression einer Glucanase, Chitinase) enthalten oder exprimieren. Sie können aber auch in ihren metabolischen Eigenschaften genetisch modifiziert sein, so dass eine qualitative und/oder quantitative Änderung von Inhaltsstoffen (z.B. durch Modifikationen des Energie-, Kohlenhydrat-, Fettsäure- oder Stickstoffwechsels oder diese beeinflussende Metabolitflüsse) zeigen (siehe oben).

Eine Liste mit Beispielen von Wirkprinzipien, die durch eine genetische Modifikation in eine Nutzpflanze eingebracht werden können, und die sich für die erfindungsgemäße Behandlung allein oder in Kombination eignen können, ist in **Tabelle 2** zusammengestellt. Diese Tabelle enthält unter der Angabe "AP" (aktives Prinzip) das jeweils betroffene Wirkprinzip und dem zugeordnet den damit zu kontrollierenden Schädling.

In einer besonders bevorzugten Variante wird das erfindungsgemäße Verfahren zur Behandlung transgener Gemüse-, Mais-, Soja-, Baumwoll-, Tabak-, Reis-, Kartoffel und Zuckerrübensorten eingesetzt, die cry1Ab oder cry1Ac gene enthalten.

Bei den Gemüsepflanzen bzw. -sorten handelt es sich beispielsweise um folgende Nutzpflanzen:
o Kartoffeln: vorzugsweise Stärkekartoffeln, Süßkartoffeln und Speisekartoffeln;
o Wurzelgemüse: vorzugsweise Möhren (Karotten), Kohlrüben (Speiserüben, Stoppelrüben, Mairüben, Herbstrüben, Teltower Rübchen), Schwarzwurzeln, Topinambur, Wurzelpetersilie, Pastinake, Rettich und Meerrettich;
o Knollengemüse: vorzugsweise Kohlrabi, Rote Bete (Rote Rübe), Sellerie (Knollensellerie), Radies und Radieschen;
o Zwiebelgemüse: vorzugsweise Porree, Lauch und Zwiebeln (Steck- und Samenzwiebel);
o Kohlgemüse: vorzugsweise Kopfkohl (Weißkohl, Rotkohl, Blattkohl, Wirsingkohl), Blumenkohl, Sprossenkohl, Brokkoli, Grünkohl, Markstammkohl, Meerkohl und Rosenkohl;
o Fruchtgemüse: vorzugsweise Tomaten (Freiland- ,Strauch-, Fleisch-, Gewächshaus-, Cocktail-, Industrie- und Frischmarkt-Tomaten), Melonen, Eierfrucht, Auberginen, Paprika (Gemüse- und Gewürzpaprika, Spanischer Pfeffer), Peperoni, Kürbis, Zucchini und Gurken (Freiland-, Gewächshaus-, Schlangen- und Einlegegurken);
o Gemüsehülsenfrüchte: vorzugsweise Buschbohnen (als Schwertbohnen, Perlbohnen, Flageoletbohnen, Wachsbohnen, Trockenkochbohnen mit grün- und gelbhülsigen Sorten), Stangenbohnen (als Schwertbohnen, Perlbohnen, Flageoletbohnen, Wachsbohnen mit grün-, blau- und gelbhülsigen Sorten), Dicke Bohnen (Ackerbohnen, Puffbohnen, Sorten mit weiß und schwarz gefleckten Blüten), Erbsen (Platterbsen, Kichererbsen, Markerbsen, Schalerbsen, Zuckererbsen, Palerbsen, Sorten mit hell- und dunkelgrünem Frischkorn) und Linsen;
o Blatt- und Stielgemüse: vorzugsweise Chinakohl, Kopfsalat, Pflücksalat, Feldsalat, Eisbergsalat, Romanasalat, Eichblattsalat, Endivien, Radicchio, Lollo rosso-Salat, Ruccola-Salat, Chicoree, Spinat, Mangold (Blatt- und Stielmangold) und Petersilie;
o Sonstige Gemüse: vorzugsweise Spargel, Rhabarber, Schnittlauch, Artischocken, Minzen, Sonnenblumen, Knollenfenchel, Dill, Gartenkresse, Senf, Mohn, Erdnuß, Sesam und Salatzichorien.

Bt-Gemüse einschließlich beispielhafter Methoden zu ihrer Herstellung sind ausführlich beschrieben beispielsweise in Barton et al., 1987, Plant Physiol. 85 : 1103-1109 ; Vaeck et al., 1987, Nature 328 : 33-37 ; Fischhoff et al., 1987, Bio/Technology 5 : 807-813. Bt-Gemüsepflanzen sind darüber hinaus bereits bekannt als kommerziell erhältliche Varianten, beispielsweise die Kartoffelsorte NewLeaf^{®} (Monsanto). Ebenso beschreibt die US 6,072,105 die Herstellung von Bt-Gemüse.

Ebenso ist auch bereits Bt-Baumwolle dem Grunde nach bekannt, beispielsweise aus der US-A-5,322,938 oder aus Prietro-Samsonór et al., J. Ind. Microbiol. & Biotechn. 1997, 19, 202, und H. Agaisse und D. Lereclus, J. Bacteriol. 1996, 177, 6027. Auch Bt-Baumwolle ist bereits in verschiedenen Variationen kommerziell erhältlich, beispielsweise unter den Namen NuCOTN® (Deltapine (USA)). Im Rahmen der vorliegenden Erfindung ist die Bt-Baumwolle NuCOTN33® und NuCOTN33B® besonders bevorzugt.

Auch die Verwendung und Herstellung von Bt-Mais ist bereits lange bekannt, beispielsweise aus Ishida, Y., Saito, H., Ohta, S., Hiei, Y., Komari, T., and Kumashiro, T. (1996). High efficiency transformation of maize (Zea mayz L.) mediated by Agrobacterium tumefaciens. Nature Biotechnology 4: 745-750. Auch die EP-B-0485506 beschreibt die Herstellung von Bt-Maispflanzen. Bt-Mais ist weiterhin in verschiedenen Variationen kommerziell erhältlich, beispielsweise unter folgenden Namen (Firma/Firmen jeweils in Klammern): KnockOut® (Novartis Seeds), NaturGard® (Mycogen Seeds), Yieldgard® (Novartis Seeds, Monsanto, Cargill, Golden Harvest, Pioneer, DeKalb u. a.), Bt-Xtra® (DeKalb) und StarLink® (Aventis CropScience, Garst u. a.). Im Sinne der vorliegenden Erfindung ist vor allem die folgenden Maissorte besonders bevorzugt: Bt-Xtra®.

Auch für Sojabohne sind Roundup®Ready Sorten oder Sorten mit einer Resistenz gegen das Herbizid Liberty Link® erhältlich. Bei Reis sind eine Vielzahl von Linien des so genannten "Golden Rice" erhältlich, die sich gleichermaßen dadurch auszeichnen, dass sie durch eine transgene Modifikation einen erhöhten Gehalt an Provitamin A aufweisen.

Die Wirkstoffkombinationen können in die üblichen Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Die Herstellung der Formulierungen erfolgt entweder in geeigneten Anlagen oder auch vor oder während der Anwendung.

Spritzpulver sind in Wasser gleichmäßig dispergierbare Präparate, die neben den Wirkstoffen außer einem Verdünnungs- oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2'-dinaphthylmethan-6,6'-disulfonsaures Natrium enthalten.

Stäubemittel erhält man durch Vermahlen der Wirkstoffe mit fein verteilten festen Stoffen, z.B. Talkum, natürlichen Tonen wie Kaolin, Bentonit, Pyrophillit oder Diatomeenerde. Granulate können entweder durch Verdüsen der Wirkstoffe auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Als Hilfsstoffe können solche Stoffe Verwendung finden, die geeignet sind, dem Mittel selbst oder und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsysulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

### Als feste Trägerstoffe kommen beispielsweise in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, Alkyl-Aryl- und/oder POP- POE-Ether, Fett- und/oder POP- POE-Addukte, POE- und/oder POP-Polyol Derivate, POE- und/oder POP-Sorbitan- oder-Zucker-Addukte, Alky- oder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabile gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel.

Diese einzelnen Formulierungstypen sind im Prinzip bekannt und beispielsweise beschrieben in: Winnacker-Küchler, 1986, "Chemische Technologie", Band 7, 4. Aufl., C. Hauser Verlag München; van Falkenberg, 1972-73, "Pesticides Formulations", 2nd Ed., Marcel Dekker N.Y.; Martens, 1979, "Spray Drying Handbook", 3rd Ed., G. Goodwin Ltd. London.

Der Fachmann kann aufgrund seiner allgemeinen Fachkenntnisse geeignete Formulierungshilfen auswählen (siehe dazu beispielsweise Watkins, "Handbook of Insecticide Dust Diluents and Carriers", 2nd Ed., Darland Books, Caldwell N.J.; v. Olphen, "Introduction to Clay Colloid Chemistry", 2nd Ed., J. Wiley & Sons, N.Y.; Marsden, "Solvents Guide", 2nd Ed., Interscience, N.Y. 1950; McCutcheon's, "Detergents and Emulsifiers Annual", MC Publ. Corp., Ridgewood, N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1967; Winnacker-Küchler, "Chemische Technologie", Band 7, 4. Aufl., C. Hanser Verlag München 1986.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Auch eine Mischung mit anderen bekannten Wirkstoffen, wie Herbiziden oder mit Düngemitteln und Wachstumsregulatoren ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Die Formulierungen enthalten im Allgemeinen zwischen 0,01 und 98 Gew.-% Wirkstoff, vorzugsweise zwischen 0,5 und 90 %. In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 5 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Mit den äußeren Bedingungen wie Temperatur, Feuchtigkeit u.a. kann auch die erforderliche Aufwandmenge variieren. Sie kann innerhalb weiter Grenzen schwanken, z.B. zwischen 0,1 g/ha und 5,0 kg/ha oder mehr Aktivsubstanz. Aufgrund der synergistischen Effekte zwischen Bt-Gemüse und den erfindungsgemäßen Wirkstoffkombinationen sind Aufwandmengen von 0,1 bis 500 g/ha bevorzugt. Aufwandmengen von 10 bis 500 g/ha sind besonders bevorzugt, insbesondere bevorzugt sind 10 bis 200 g/ha.

Die erfindungsgemäßen Mischungen können in ihren handelsüblichen Formulierungen sowie in den aus diesen Formulierungen bereiteten Anwendungsformen in Mischungen mit anderen Wirkstoffen, wie Insektiziden, Lockstoffen, Sterilantien, Akariziden, Nematiziden, Fungiziden, wachstumsregulierenden Stoffen oder Herbiziden vorliegen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

**Tabelle 1: Pflanze: Mais**

| Betroffene Struktur bzw. Exprimiertes Prinzip | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäure, Cyclohexandion |
| Hydroxyphenylpyruvat-Dioxygenase (HPPD) | Isooxazole wie Isoxaflutol oder Isoxachlortol, Trione wie Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP- Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklisches Imid, Phenylpyrazol, Pyridinderivat, Phenopylat, Oxadiazol usw. |
| Cytochrom P450 z.B. P450 SU1 | Xenobiotika und Herbizide wie Sulfonylharnstoff |
| Dimboa-Biosynthese (Bxl-Gen) | Helminthosporium turcicum, Rhopalosiphum maydis, Diplodia maydis, Ostrinia nubilalis, lepidoptera sp. |
| CMIII (kleiner grundlegender Peptidbaustein aus dem Maiskorn) | Pflanzenpathogene z.B. Fusarium, Altemaria, Sclerotina |
| Com- SAFP (Zeamatin) | Pflanzenpathogene, z.B. Fusarium, Alternaria, Sclerotina, Rhizoctonia, Chaetomium, Phycomycen |
| Hm1-Gen | Cochliobulus |
| Chitinasen | Pflanzenpathogene |
| Glucanasen | Pflanzenpathogene |
| Hüllproteine | Viren wie das Maisverzwergungsvirus (MDMV) |
| Toxine von Bacillus thuringiensis, VIP 3, Bacillus-cereus-Toxin, Photorabdus und Toxine von Xenorhabdus | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| 3- Hydroxysteroidoxidase | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Peroxidase | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Aminopeptidase-Inhibitoren z.B. Leucin Aminopeptidase-Inhibitoren (LAPI) | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Limonensynthase | Maiswurzelbohrer |
| Lektin | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Protease-Inhibitoren z.B. Cystatin, Patatin, Virgiferin, CPTI | Rüsselkäfer, Maiswurzelbohrer |
| Ribosomeninaktivierendes Protein | Lepidoptera, Coleoptera, Diptera, Nematoden, |
| | z.B. Ostrinia nubilalis, Heliothis zea, Heerwürmer z.B. Spodoptera frugiperda, Maiswurzelbohrer, Sesamia sp., Aprotis ipsilon, Asiatischer Mais zünsler, Rüsselkäfer |
| 5C9-Maispolypeptid | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Mais zünsler, Rüsselkäfer |
| HMG-CoA-Reductase | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Mais zünsler, Rüsselkäfer |

| | |
|---|---|
| Pflanze: Weizen | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |

| Betroffene Struktur/ Exprimiertes Protein | Merkmal der Pflanze / Toleranz gegenüber |
|---|---|
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 | Xenobiotika und Herbizide wie etwa Sulfonylharnstoffverbindungen |
| Pilzbekämpfendes Polypeptid AlyAFP | Pflanzenpathogene, z.B. Septoria und Fusarium |
| Glucoseoxidase | Pflanzenpathogene, z.B. Fusarium, Septoria |
| Pyrrolnitrinsynthese-Gene | Pflanzenpathogene, z.B. Fusarium, Septoria |
| Serin/Threonin-Kinasen | Pflanzenpathogene, z.B. Fusarium, Septoria und andere Krankheiten |
| Polypeptid mit der Wirkung, eine Überempfindlichkeitsreaktion auszulösen | Pflanzenpathogene, z.B. Fusarium, Septoria und andere Krankheiten |
| Gene der systemischen erworbenen Widerstandskraft (SAR) | Virale, bakterielle Pilz- und Nematoden-Pathogene |
| Chitinasen | Pflanzenpathogene |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, Bacillus-cereus-Toxine, Photorabdus und Toxine von Xenorhabdus | Lepidoptera, Coleoptera, Diptera, Nematoden |
| 3- Hydroxysteroidoxidase | Lepidoptera, Coleoptera, Diptera, Nematoden |
| Peroxidase | Lepidoptera, Coleoptera, Diptera, Nematoden |
| Aminopeptidase-Inhibitoren, z.B. Leucin Aminopeptidase-Inhibitor | Lepidoptera, Coleoptera, Diptera, Nematoden |
| Lektine | Lepidoptera, Coleoptera, Diptera, Nematoden, Blattläuse |
| Protease-Inhibitoren, z.B. Cystatin, Patatin, Virgiferin, CPTI | Lepidoptera, Coleoptera, Diptera, Nematoden, Blattläuse |
| Ribosomeninaktivierendes Protein | Lepidoptera, Coleoptera, Diptera, Nematoden, Blattläuse |
| HMG-CoA-Reductase | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |

| Pflanze: Gerste | |
|---|---|
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 | Xenobiotika und Herbizide wie etwa Sulfonylharnstoffverbindungen |

| Betroffene Struktur/ Exprimiertes Protein | Merkmal der Pflanze / Toleranz gegenüber |
|---|---|
| Pilzbekämpfendes Polypeptid AlyAFP | Pflanzenpathogene, z.B. Septoria und Fusarium |
| Glucoseoxidase | Pflanzenpathogene, z.B. Fusarium, Septoria |
| Pyrrolnitrinsynthese-Gene | Pflanzenpathogene, z.B. Fusarium, Septoria |
| Serin/Threonin-Kinasen | Pflanzenpathogene, z.B. Fusarium, Septoria und andere Krankheiten |
| Polypeptid mit der Wirkung, eine | Pflanzenpathogene, z.B. Fusarium, Septoria und |
| Überempfindlichkeitsreaktion auszulösen | andere Krankheiten |
| Gene der systemischen erworbenen Widerstandskraft (SAR) | Virale, bakterielle Pilz- und Nematoden-Pathogene |
| Chitinasen | Pflanzenpathogene |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, Bacillus-cereus-Toxine, Photorabdus und Toxine von Xenorhabdus | Lepidoptera, Coleoptera, Diptera, Nematoden |
| 3- Hydroxysteroidoxidase | Lepidoptera, Coleoptera, Diptera, Nematoden |
| Peroxidase | Lepidoptera, Coleoptera, Diptera, Nematoden |
| Aminopeptidase-Inhibitoren, z.B. Leucin Aminopeptidase-Inhibitor | Lepidoptera, Coleoptera, Diptera, Nematoden |
| Lektine | Lepidoptera, Coleoptera, Diptera, Nematoden, Blattläuse |
| Protease-Inhibitoren, z.B. Cystatin, Patatin, Virgiferin, CPTI | Lepidoptera, Coleoptera, Diptera, Nematoden, Blattläuse |
| Ribosomeninaktivierendes Protein | Lepidoptera, Coleoptera, Diptera, Nematoden, Blattläuse |
| HMG-CoA-Reductase | Lepidoptera, Coleoptera, Diptera, Nematoden, Blattläuse |

| | |
|---|---|
| Pflanze: Reis | |
| | |
| Betroffene Struktur/ Exprimiertes Prinzip | Merkmal der Pflanze / Toleranz gegenüber |
| Acetolactatsynthase (ALS) | Sulfonylharnstoffverbindungen, Imidazolinone |

| Betroffene Struktur/ Exprimiertes Prinzip | Merkmal der Pflanze / Toleranz gegenüber |
|---|---|
| | Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 | Xenobiotika und Herbizide wie etwa Sulfonylharnstoffverbindungen |
| Pilzbekämpfendes Polypeptid AlyAFP | Pflanzenpathogene |
| Glucoseoxidase | Pflanzenpathogene |
| Pyrrolnitrinsynthese-Gene | Pflanzenpathogene |
| Serin/Threonin-Kinasen | Pflanzenpathogene |
| Phenylalanin-Ammoniak-Lyase (PAL) | Pflanzenpathogene, z.B. bakterieller Blattmehltau und induzierbare Reisbräune |
| Phytoalexine | Pflanzenpathogene, z.B. bakterieller Blattmehltau und Reisbräune |
| B-1,3-Glucanase (Antisense) | Pflanzenpathogene, z.B. bakterieller Blattmehltau und Reisbräune |
| Rezeptorkinase | Pflanzenpathogene, z.B. bakterieller |
| | Blattmehltau und Reisbräune |
| Polypeptid mit der Wirkung, eine Überempfindlichkeitsreaktion auszulösen | Pflanzenpathogene |
| Gene der systemischen erworbenen | Virale, bakterielle Pilz- und Nematoden- |
| Widerstandskraft (SAR) | Pathogene |
| Chitinasen | Pflanzenpathogene, z.B. bakterieller Blattmehltau und Reisbräune |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, Bacillus-cereus-Toxine, Photorabdus und Toxine von Xenorhabdus | Lepidoptera, z.B. Stengelbohrer, Coleoptera, z.B. Rüsselkäfer wie Lissorhoptrus oryzophilus, Diptera, Reiszikaden, z.B. braunrückige Reiszikade |
| 3- Hydroxysteroidoxidase | Lepidoptera, z.B. Stengelbohrer, Coleoptera, z.B. Rüsselkäfer wie Lissorhoptrus oryzophilus, Diptera, Reiszikaden, z.B. braunrückige Reiszikade |
| Peroxidase | Lepidoptera, z.B. Stengelbohrer, Coleoptera, z.B. Rüsselkäfer wie Lissorhoptrus oryzophilus, Diptera, Reiszikaden, z.B. braunrückige Reiszikade |
| Aminopeptidase-Inhibitoren, z.B. Leucin Aminopeptidase-Inhibitor | Lepidoptera, z.B. Stengelbohrer, Coleoptera, z.B. Rüsselkäfer wie Lissorhoptrus oryzophilus, Diptera, Reiszikaden, z.B. braunrückige Reiszikade |
| Lektine | Lepidoptera, z.B. Stengelbohrer, Coleoptera, z.B. Rüsselkäfer wie Lissorhoptrus oryzophilus, Diptera, Reiszikaden, z.B. braunrückige Reiszikade |
| Protease-Inhibitoren, | Lepidoptera, z.B. Stengelbohrer, Coleoptera, z.B. Rüsselkäfer wie Lissorhoptrus oryzophilus, Diptera, Reiszikaden z.B. braunrückige Reiszikade |
| Ribosomeninaktivierendes Protein | Lepidoptera, z.B. Stengelbohrer, Coleoptera, |
| | z.B. Rüsselkäfer wie Lissorhoptrus oryzophilus, Diptera, Reiszikaden, z.B. braunrückige Reiszikade |
| HMG-CoA-Reductase | Lepidoptera, z.B. Stengelbohrer, Coleoptera, z.B. Rüsselkäfer wie Lissorhoptrus oryzophilus, Diptera, Reiszikaden z.B. braunrückige Reiszikade |

| | |
|---|---|
| Pflanze: Sojabohne | |
| | |
| Betroffene Struktur/ Exprimiertes Prinzip | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa |

| Betroffene Struktur/ Exprimiertes Prinzip | Merkmal der Pflanze / Toleranz gegenüber |
|---|---|
| | Sulfonylharnstoffverbindungen |
| Pilzbekämpfendes Polypeptid AlyAFP | Bakterielle und Pilz-Pathogene wie etwa Fusarium, Sklerotinia, Weißstängeligkeit |
| Oxalatoxidase | Bakterielle und Pilz-Pathogene wie etwa Fusarium, Sklerotinia, Weißstängeligkeit |
| Glucoseoxidase | Bakterielle und Pilz-Pathogene wie etwa Fusarium, Sklerotinia, Weißstängeligkeit |
| Pyrrolnitrinsynthese-Gene | Bakterielle und Pilz-Pathogene wie etwa Fusarium, Sklerotinia, Weißstängeligkeit |
| Serin/Threonin-Kinasen | Bakterielle und Pilz-Pathogene wie etwa Fusarium, Sklerotinia, Weißstängeligkeit |
| Phenylalanin-Ammoniak-Lyase (PAL) | Bakterielle und Pilz-Pathogene wie etwa Fusarium, Sklerotinia, Weißstängeligkeit |
| Phytoalexine | Pflanzenpathogene, z.B. bakterieller Blattmehltau und Reisbräune |
| B-1,3-glucanase (Antisense) | Pflanzenpathogene, z.B. bakterieller Blattmehltau und Reisbräune |
| Rezeptorkinase | Bakterielle und Pilz-Pathogene wie etwa Fusarium, Sklerotinia, Weißstängeligkeit |
| Polypeptid mit der Wirkung, eine ÜberEmpfindlichkeitsreaktion auszulösen | Pflanzenpathogene |
| Gene der systemischen erworbenen Widerstandskraft (SAR) | Virale, bakterielle Pilz- und Nematoden-Pathogene |
| Chitinasen | Bakterielle und Pilz-Pathogene wie etwa Fusarium, Sklerotinia, Weißstängeligkeit |
| Glucanasen | Bakterielle und Pilz-Pathogene wie etwa Fusarium, Sklerotinia, Weißstängeligkeit |
| Doppelstrang-Ribonuclease | Viren wie etwa BPMV und SbMV |
| Hüllproteine | Viren wie etwa BYDV und MSMV |
| Toxine von Bacillus thuringiensis, VIP 3, Bacillus-cereus-Toxine, Photorabdus und Toxine von Xenorhabdus | Lepidoptera, Coleoptera, Blattläuse |
| 3- Hydroxysteroidoxidase | Lepidoptera, Coleoptera, Blattläuse |
| Peroxidase | Lepidoptera, Coleoptera, Blattläuse |
| Aminopeptidase-Inhibitoren, z.B. Leucin | Lepidoptera, Coleoptera, Blattläuse |
| Aminopeptidase-Inhibitor | |
| Lektine | Lepidoptera, Coleoptera, Blattläuse |
| Protease-Inhibitoren, z.B. Virgiferin | Lepidoptera, Coleoptera, Blattläuse |
| Ribosomeninaktivierendes Protein | Lepidoptera, Coleoptera, Blattläuse |
| HMG-CoA-Reductase | Lepidoptera, Coleoptera, Blattläuse |
| Barnase | Nematoden, z.B. Wurzelknotennematoden und Zystennematoden |
| Schlüpfauslösefaktor für Zystennematoden | Zystennematoden |
| Prinzipien zur Verhinderung der Nahrungsaufnahme | Nematoden, z.B. Wurzelknoten-Nematoden und Zystennematoden |

| | |
|---|---|
| Pflanze: Kartoffel | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosat-Oxidoreductase | Glyphosat oder Sulfosat |
| Protoporphyrinogenoxidase (PROTOX) | Diphenylether, zyklische Imide, |

| Betroffene Struktur/ Exprimiertes Protein | Merkmal der Pflanze / Toleranz gegenüber |
|---|---|
| | Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Schwarzfleckigkeit |
| Metallothionein | Bakterielle und Pilz-Pathogene wie etwa Phytophtora |
| Ribonuclease | Phytophtora, Verticillium, Rhizoctonia |
| Pilzbekämpfendes Polypeptid AlyAFP | Bakterielle und Pilz-Pathogene wie etwa Phytophtora |
| Oxalatoxidase | Bakteriell und Pilz-Pathogene wie etwa Phytophtora, Verticillium, Rhizoctonia |
| Glucoseoxidase | Bakterielle und Pilz-Pathogene wie etwa Phytophtora, Verticillium, Rhizoctonia |
| Pyrrolnitrinsynthese-Gene | Bakterielle und Pilz-Pathogene wie etwa Phytophtora, Verticillium, Rhizoctonia |
| Serin/Threonin-Kinasen | Bakterielle und Pilz-Pathogene wie etwa Phytophtora, Verticillium, Rhizoctonia |
| Cecropin B | Bakterien wie etwa Corynebacterium sepedonicum, Erwinia carotovora |
| Phenylalanin-Ammoniak-Lyase (PAL) | Bakterielle und Pilz-Pathogene wie etwa Phytophtora, Verticillium, Rhizoctonia |
| Phytoalexine | Bakterielle und Pilz-Pathogene wie etwa Phytophtora, Verticillium, Rhizoctonia |
| B-1,3-glucanase (Antisense) | Bakterielle und Pilz-Pathogene wie etwa Phytophtora, Verticillium, Rhizoctonia |
| Rezeptorkinase | Bakterielle und Pilz-Pathogene wie etwa Phytophtora, Verticillium, Rhizoctonia |
| Polypeptid mit der Wirkung, eine Über-empfindlichkeitsreaktion auszulösen | Bakterielle und Pilz-Pathogene wie etwa Phytophtora, Verticillium, Rhizoctonia |
| Gene der systemischen erworbenen Widerstandskraft (SAR) | Virale, bakterielle Pilz- und Nematoden-Pathogene |
| Chitinasen | Bakterielle und Pilz-Pathogene wie etwa Phytophtora, Verticillium, Rhizoctonia |
| Barnase | Bakterielle und Pilz- Pathogene wie etwa Phytophtora, Verticillium, Rhizoctonia |
| Gen 49 zur Steuerung des Widerstandes gegen | Bakterielle und Pilz-Pathogene wie etwa |
| Krankheiten | Phytophtora, Verticillium, Rhizoctonia |
| Trans-Aldolase (Antisense) | Schwarzfleckigkeit |
| Glucanasen | Bakterielle und Pilz-Pathogene wie etwa Phytophtora, Verticillium, Rhizoctonia |
| Doppelstrang-Ribonuclease | Viren wie etwa PLRV, PVY und TRV |
| Hüllproteine | Viren wie etwa PLRV, PVY und TRV |
| 17kDa oder 60 kDa Protein | Viren wie etwa PLRV, PVY und TRV |
| Einschlussproteine des Kerns z.B. a oder b | Viren wie etwa PLRV, PVY und TRV |
| Pseudoubiquitin | Viren wie etwa PLRV, PVY und TRV |
| Replicase | Viren wie etwa PLRV, PVY und TRV |
| Toxine von Bacillus thuringiensis, VIP 3, Bacillus-cereus-Toxine, Photorabdus und Toxine von Xenorhabdus | Coleoptera, z.B. Kartoffelkäfer, Blattläuse |
| 3- Hydroxysteroidoxidase | Coleoptera, z.B. Kartoffelkäfer, Blattläuse |
| Peroxidase | Coleoptera, z.B. Kartoffelkäfer, Blattläuse |
| Aminopeptidase-Inhibitoren, z.B. Leucin Aminopeptidase-Inhibitor | Coleoptera, z.B. Kartoffelkäfer, Blattläuse |
| Stilbensynthase | Coleoptera, z.B. Kartoffelkäfer, Blattläuse |
| Lektine | Coleoptera, z.B. Kartoffelkäfer, Blattläuse |
| Protease-Inhibitoren, z.B. Cystatin, Patatin | Coleoptera, z.B. Kartoffelkäfer, Blattläuse |
| Ribosomeninaktivierendes Protein | Coleoptera, z.B. Kartoffelkäfer, Blattläuse |
| HMG-CoA-Reductase | Coleoptera, z.B. Kartoffelkäfer, Blattläuse |
| Schlüpfauslösefaktor für Zystennematoden | Zystennematoden |
| Barnase | Nematoden, z.B. Wurzelknoten-Nematoden und Zystennematoden |
| Prinzipien zur Verhinderung der Nahrungsaufnahme | Nematoden, z.B. Wurzelknoten-Nematoden und Zystennematoden |

| | |
|---|---|
| Pflanze: Tomate | |
| | |
| Betroffene Struktur/ Exprimiertes Prinzip | Merkmal der Pflanze / Toleranz gegenüber |
| Acetolactatsynthase (ALS) | Sulfonylharnstoffverbindungen, Imidazolinone |

| Betroffene Struktur/ Exprimiertes Prinzip | Merkmal der Pflanze / Toleranz gegenüber |
|---|---|
| | Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Schwarzfleckigkeit |
| Metallothionein | Bakterielle und Pilz-Pathogene wie etwa Phytophtora |
| Ribonuclease | Phytophtora, Verticillium, Rhizoctonia |
| Pilzbekämpfendes Polypeptid AlyAFP | Bakterielle und Pilz-Pathogene wie etwa die bakterielle Fleckenkrankheit, Fusarium, Weichfäule, echter Mehltau, Krautfäule, Samtfleckenkrankheit etc. |
| Oxalatoxidase | Bakterielle und Pilz-Pathogene wie etwa die bakterielle Fleckenkrankheit, Fusarium, |
| | Weichfäule, echter Mehltau, Krautfäule, Samtfleckenkrankheit etc. |
| Glucoseoxidase | Bakterielle und Pilz-Pathogene wie etwa die bakterielle Fleckenkrankheit, Fusarium, Weichfäule, echter Mehltau, Krautfäule, Samtfleckenkrankheit etc. |
| Pyrrolnitrinsynthese-Gene | Bakterielle und Pilz-Pathogene wie etwa die bakterielle Fleckenkrankheit, Fusarium, Weichfäule, echter Mehltau, Krautfäule, Samtfleckenkrankheit etc. |
| Serin/Threonin-Kinasen | Bakterielle und Pilz-Pathogene wie etwa die bakterielle Fleckenkrankheit, Fusarium, Weichfäule, echter Mehltau, Krautfäule, Samtfleckenkrankheit etc. |
| Cecropin B | Bakterielle und Pilz-Pathogene wie etwa die bakterielle Fleckenkrankheit, Fusarium, Weichfäule, echter Mehltau, Krautfäule, Samtfleckenkrankheit etc. |
| Phenylalanin-Ammoniak-Lyase (PAL) | Bakterielle und Pilz-Pathogene wie etwa die bakterielle Fleckenkrankheit, Fusarium, Weichfäule, echter Mehltau, Krautfäule, Samtfleckenkrankheit etc. |
| Cf-Gene, z.B. Cf 9 Cf5 Cf4 Cf2 | Samtfleckenkrankheit |
| Osmotin | Dürrfleckenkrankheit |
| Alpha Hordothionin | Bakterien |
| Systemin | Bakterielle und Pilz-Pathogene wie etwa die bakterielle Fleckenkrankheit, Fusarium, Weichfäule, echter Mehltau, Krautfäule, Samtfleckenkrankheit etc. |
| Polygalacturonase-Inhibitoren | Bakterielle und Pilz-Pathogene wie etwa die bakterielle Fleckenkrankheit, Fusarium, Weichfäule, echter Mehltau, Krautfäule, Samtfleckenkrankheit etc. |
| Prf-Steuerungsgen | Bakterielle und Pilz-Pathogene wie etwa die bakterielle Fleckenkrankheit, Fusarium, |
| | Weichfäule, echter Mehltau, Krautfäule, Samtfleckenkrankheit etc. |
| 12 Fusariumresistenz-Stelle | Fusarium |
| Phytoalexine | Bakterielle und Pilz-Pathogene wie etwa die bakterielle Fleckenkrankheit, Fusarium, Weichfäule, echter Mehltau, Krautfäule, Samtfleckenkrankheit etc. |
| B-1,3-glucanase (Antisense) | Bakterielle und Pilz-Pathogene wie etwa die bakterielle Fleckenkrankheit, Fusarium, Weichfäule, echter Mehltau, Krautfäule, Samtfleckenkrankheit etc. |
| Rezeptorkinase | Bakterielle und Pilz-Pathogene wie etwa die bakterielle Fleckenkrankheit, Fusarium, Weichfäule, echter Mehltau, Krautfäule, Samtfleckenkrankheit etc. |
| Polypeptid mit der Wirkung, eine Über-empfindlichkeitsreaktion auszulösen | Bakterielle und Pilz-Pathogene wie etwa die bakterielle Fleckenkrankheit, Fusarium, Weichfäule, echter Mehltau, Krautfäule, Samtfleckenkrankheit etc. |
| Gene der systemischen erworbenen Widerstandskraft (SAR) | Virale, bakterielle Pilz- und Nematoden-Pathogene |
| Chitinasen | Bakterielle und Pilz-Pathogene wie etwa die bakterielle Fleckenkrankheit, Fusarium, Weichfäule, echter Mehltau, Krautfäule, Samtfleckenkrankheit etc. |
| Barnase | Bakterielle und Pilz-Pathogene wie etwa die bakterielle Fleckenkrankheit, Fusarium, Weichfäule, echter Mehltau, Krautfäule, Samtfleckenkrankheit etc. |
| Glucanasen | Bakterielle und Pilz-Pathogene wie etwa die bakterielle Fleckenkrankheit, Fusarium, Weichfäule, echter Mehltau, Krautfäule, Samtfleckenkrankheit etc. |
| Doppelstrang-Ribonuclease | Viren wie etwa PLRV, PVY und ToMoV |
| Hüllproteine | Viren wie etwa PLRV, PVY und ToMoV |
| 17kDa oder 60 kDa Protein | Viren wie etwa PLRV, PVY und ToMoV |
| Einschlussproteine des Kerns z.B. a oder b oder Nucleoprotein | Viren wie etwa PLRV, PVY und ToMoV TRV |
| Pseudoubiquitin | Viren wie etwa PLRV, PVY und ToMoV |
| Replicase | Viren wie etwa PLRV, PVY und ToMoV |
| Toxine von Bacillus thuringiensis, VIP 3, Bacillus-cereus-Toxine, Photorabdus und Toxine von Xenorhabdus | Lepidoptera z.B. Heliothis, weiße Fliege Blattläuse |
| 3- Hydroxysteroidoxidase | Lepidoptera z.B. Heliothis, weiße Fliege, Blattläuse |
| Peroxidase | Lepidoptera z.B. Heliothis, weiße Fliege, Blattläuse |
| Aminopeptidase-Inhibitoren, z.B. Leucin Aminopeptidase-Inhibitor | Lepidoptera z.B. Heliothis, weiße Fliege, Blattläuse |
| Lektine | Lepidoptera z.B. Heliothis, weiße Fliege, Blattläuse |
| Protease-Inhibitoren, z.B. Cystatin, Patatin | Lepidoptera z.B. Heliothis, weiße Fliege, Blattläuse |
| Ribosomeninaktivierendes Protein | Lepidoptera z.B. Heliothis, weiße Fliege, Blattläuse |
| Stilbensynthase | Lepidoptera z.B. Heliothis, weiße Fliege, Blattläuse |
| HMG-CoA-Reductase | Lepidoptera z.B. Heliothis, weiße Fliege, Blattläuse |
| Schlüpfauslösefaktor für Zystennematoden | Zystennematoden |
| Barnase | Nematoden, z.B. Wurzelknoten-Nematoden und Zystennematoden |
| Prinzipien zur Verhinderung der Nahrungsaufnahme | Nematoden, z.B. Wurzelknoten-Nematoden und Zystennematoden |

| | |
|---|---|
| Pflanze: Paprika | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone |

| Betroffene Struktur/ Exprimiertes Protein | Merkmal der Pflanze / Toleranz gegenüber |
|---|---|
| | Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle und Pilz-Pathogene |
| Metallothionein | Bakterielle und Pilz-Pathogene |
| Ribonuclease | Bakterielle und Pilz-Pathogene |
| Pilzbekämpfendes Polypeptid AlyAFP | Bakterielle und Pilz-Pathogene |
| Oxalatoxidase | Bakterielle und Pilz-Pathogene |
| Glucoseoxidase | Bakterielle und Pilz-Pathogene |
| Pyrrolnitrinsynthese-Gene | Bakterielle und Pilz-Pathogene |
| Serin/Threonin-Kinasen | Bakterielle und Pilz-Pathogene |
| Cecropin B | Bakterielle und Pilz-Pathogene, Fäule, Samtfleckenkrankheit, etc |
| Phenylalanin-Ammoniak-Lyase (PAL) | Bakterielle und Pilz-Pathogene |
| Cf-Gene, z.B. Cf 9 Ct5 Cf4 Cf2 | Bakterielle und Pilz-Pathogene |
| Osmotin | Bakterielle und Pilz-Pathogene |
| Alpha Hordothionin | Bakterielle und Pilz-Pathogene |
| Systemin | Bakterielle und Pilz-Pathogene |
| Polygalacturonase-Inhibitoren | Bakterielle und Pilz-Pathogene |
| Prf-Steuerungsgen | Bakterielle und Pilz-Pathogene |
| 12 Fusariumresistenz-Stelle | Fusarium |
| Phytoalexine | Bakterielle und Pilz-Pathogene |
| B-1,3-glucanase (Antisense) | Bakterielle und Pilz-Pathogene |
| Rezeptorkinase | Bakterielle und Pilz-Pathogene |
| Polypeptid mit der Wirkung, eine Über-empfindlichkeitsreaktion auszulösen | Bakterielle und Pilz-Pathogene |
| Gene der systemischen erworbenen Widerstandskraft (SAR) | Virale, bakterielle Pilz- und Nematoden-Pathogene |
| Chitinasen | Bakterielle und Pilz-Pathogene |
| Barnase | Bakterielle und Pilz-Pathogene |
| Glucanasen | Bakterielle und Pilz-Pathogene |
| Doppelstrang-Ribonuclease | Viren wie etwa CMV, TEV |
| Hüllproteine | Viren wie etwa CMV, TEV |
| 17kDa oder 60 kDa Protein | Viren wie etwa CMV, TEV |
| Einschlussproteine des Kerns z.B. a oder b oder Nucleoprotein | Viren wie etwa CMV, TEV |
| Pseudoubiquitin | Viren wie etwa CMV, TEV |
| Replicase | Viren wie etwa CMV, TEV |
| Toxine von Bacillus thuringiensis, VIP 3, Bacillus-cereus-Toxine, Photorabdus und Toxine von Xenorhabdus | Lepidoptera, weiße Fliege, Blattläuse |
| 3- Hydroxysteroidoxidase | Lepidoptera, weiße Fliege, Blattläuse |
| Peroxidase | Lepidoptera, weiße Fliege, Blattläuse |
| Aminopeptidase-Inhibitoren, z.B. Leucin Aminopeptidase-Inhibitor | Lepidoptera, weiße Fliege, Blattläuse |
| Lektine | Lepidoptera, weiße Fliege, Blattläuse |
| Protease-Inhibitoren, z.B. Cystatin, Patatin | Lepidoptera, weiße Fliege, Blattläuse |
| Ribosomeninaktivierendes Protein | Lepidoptera, weiße Fliege, Blattläuse |
| Stilbensynthase | Lepidoptera, weiße Fliege, Blattläuse |
| HMG-CoA-Reductase | Lepidoptera, weiße Fliege, Blattläuse |
| Schlüpfauslösefaktor für Zystennematoden | Zystennematoden |
| Barnase | Nematoden, z.B. Wurzelknoten-Nematoden und Zystennematoden |
| Prinzipien zur Verhinderung der Nahrungsaufnahme | Nematoden, z.B. Wurzelknoten-Nematoden und Zystennematoden |

| | |
|---|---|
| Pflanze: Wein | |
| | |
| Betroffene Struktur/ Exprimiertes Prinzip | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa |

| Betroffene Struktur/ Exprimiertes Prinzip | Merkmal der Pflanze / Toleranz gegenüber |
|---|---|
| | Sulfonylharnstoffverbindungen |
| Polyphenoloxidase oder Polyphenol-Oxidase (Antisense) | Bakterielle und Pilz-Pathogene wie Botrytis und echter Mehltau |
| Metallothionein | Bakterielle und Pilz-Pathogene wie Botrytis und echter Mehltau |
| Ribonuclease | Bakterielle und Pilz-Pathogene wie Botrytis und echter Mehltau |
| Pilzbekämpfendes Polypeptid AlyAFP | Bakterielle und Pilz-Pathogene wie Botrytis und echter Mehltau |
| Oxalatoxidase | Bakterielle und Pilz-Pathogene wie Botrytis und echter Mehltau |
| Glucoseoxidase | Bakterielle und Pilz-Pathogene wie Botrytis und echter Mehltau |
| Pyrrolnitrinsynthese-Gene | Bakterielle und Pilz-Pathogene wie Botrytis und echter Mehltau |
| Serin/Threonin-Kinasen | Bakterielle und Pilz-Pathogene wie Botrytis und echter Mehltau |
| Cecropin B | Bakterielle und Pilz-Pathogene wie Botrytis und echter Mehltau |
| Phenylalanin-Ammoniak-Lyase (PAL) | Bakterielle und Pilz-Pathogene wie Botrytis und echter Mehltau |
| Cf-Gene, z.B. Cf 9 Cf5 Cf4 Cf2 | Bakterielle und Pilz-Pathogene wie Botrytis und echter Mehltau |
| Osmotin | Bakterielle und Pilz-Pathogene wie Botrytis und echter Mehltau |
| Alpha Hordothionin | Bakterielle und Pilz-Pathogene wie Botrytis und echter Mehltau |
| Systemin | Bakterielle und Pilz-Pathogene wie Botrytis und echter Mehltau |
| Polygalacturonase-Inhibitoren | Bakterielle und Pilz-Pathogene wie Botrytis und echter Mehltau |
| Prf-Steuerungsgen | Bakterielle und Pilz-Pathogene wie Botrytis und echter Mehltau |
| Phytoalexine | Bakterielle und Pilz-Pathogene wie Botrytis und echter Mehltau |
| B-1,3-glucanase (Antisense) | Bakterielle und Pilz-Pathogene wie Botrytis und echter Mehltau |
| Rezeptorkinase | Bakterielle und Pilz-Pathogene wie Botrytis und echter Mehltau |
| Polypeptid mit der Wirkung, eine Überempfindlichkeitsreaktion auszulösen | Bakterielle und Pilz-Pathogene wie Botrytis und echter Mehltau |
| Gene der systemischen erworbenen Widerstandskraft (SAR) | Virale, bakterielle Pilz- und Nematoden-Pathogene |
| Chitinasen | Bakterielle und Pilz-Pathogene wie Botrytis und echter Mehltau |
| Barnase | Bakterielle und Pilz-Pathogene wie Botrytis und echter Mehltau |
| Glucanasen | Bakterielle und Pilz-Pathogene wie Botrytis und echter Mehltau |
| Doppelstrang-Ribonuclease | Viren |
| Hüllproteine | Viren |
| 17kDa oder 60 kDa Protein | Viren |
| Einschlussproteine des Kerns z.B. a oder b oder Nucleoprotein | Viren |
| Pseudoubiquitin | Viren |
| Replicase | Viren |
| Toxine von Bacillus thuringiensis, VIP 3, Bacillus-cereus-Toxine, Photorabdus und Toxine von Xenorhabdus | Lepidoptera, Blattläuse |
| 3- Hydroxysteroidoxidase | Lepidoptera, Blattläuse |
| Peroxidase | Lepidoptera, Blattläuse |
| Aminopeptidase-Inhibitoren, z.B. Leucin Aminopeptidase-Inhibitor | Lepidoptera, Blattläuse |
| Lektine | Lepidoptera, Blattläuse |
| Protease-Inhibitoren, z.B. Cystatin, Patatin | Lepidoptera, Blattläuse |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und |
| CBI | Zystennematoden oder allgemeine Krankheiten Wurzelknotennematoden |
| Prinzipien zur Verhinderung der Nahrungsaufnahme | Nematoden, z.B. Wurzelknoten-Nematoden oder Wurzelzystennematoden |

| | |
|---|---|
| Pflanze: Ölraps | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle und Pilz-Pathogene wie Cylindrosporium, Phoma, Sklerotinia |

| Betroffene Struktur/ Exprimiertes Protein | Merkmal der Pflanze / Toleranz gegenüber |
|---|---|
| Metallothionein | Bakterielle und Pilz-Pathogene wie Cylindrosporium, Phoma, Sklerotinia |
| Ribonuclease | Bakterielle und Pilz-Pathogene wie Cylindrosporium, Phoma, Sklerotinia |
| Pilzbekämpfendes Polypeptid AlyAFP | Bakterielle und Pilz-Pathogene wie Cylindrosporium, Phoma, Sklerotinia |
| Oxalatoxidase | Bakterielle und Pilz-Pathogene wie Cylindrosporium, Phoma, Sklerotinia |
| Glucoseoxidase | Bakterielle und Pilz-Pathogene wie Cylindrosporium, Phoma, Sklerotinia |
| Pyrrolnitrinsynthese-Gene | Bakterielle und Pilz-Pathogene wie Cylindrosporium, Phoma, Sklerotinia |
| Serin/Threonin-Kinasen | Bakterielle und Pilz-Pathogene wie Cylindrosporium, Phoma, Sklerotinia |
| Cecropin B | Bakterielle und Pilz-Pathogene wie Cylindrosporium, Phoma, Sklerotinia |
| Phenylalanin-Ammoniak-Lyase (PAL) | Bakterielle und Pilz-Pathogene wie Cylindrosporium, Phoma, Sklerotinia |
| Cf-Gene, z.B. Cf 9 Cf5 Cf4 Cf2 | Bakterielle und Pilz-Pathogene wie Cylindrosporium, Phoma, Sklerotinia |
| Osmotin | Bakterielle und Pilz-Pathogene wie Cylindrosporium, Phoma, Sklerotinia |
| Alpha Hordothionin | Bakterielle und Pilz-Pathogene wie Cylindrosporium, Phoma, Sklerotinia |
| Systemin | Bakterielle und Pilz-Pathogene wie Cylindrosporium, Phoma, Sklerotinia |
| Polygalacturonase-Inhibitoren | Bakterielle und Pilz-Pathogene wie Cylindrosporium, Phoma, Sklerotinia |
| Prf-Steuerungsgen | Bakterielle und Pilz-Pathogene wie Cylindrosporium, Phoma, Sklerotinia |
| Phytoalexine | Bakterielle und Pilz-Pathogene wie Cylindrosporium, Phoma, Sklerotinia |
| B-1,3-glucanase (Antisense) | Bakterielle und Pilz-Pathogene wie Cylindrosporium, Phoma, Sklerotinia |
| Rezeptorkinase | Bakterielle und Pilz-Pathogene wie |
| | Cylindrosporium, Phoma, Sklerotinia |
| Polypeptid mit der Wirkung, eine Über-empfindlichkeitsreaktion auszulösen | Bakterielle und Pilz-Pathogene wie Cylindrosporium, Phoma, Sklerotinia |
| Gene der systemischen erworbenen Widerstandskraft (SAR) | Virale, bakterielle Pilz- und Nematoden-Pathogene |
| Chitinasen | Bakterielle und Pilz-Pathogene wie Cylindrosporium, Phoma, Sklerotinia |
| Barnase | Bakterielle und Pilz-Pathogene wie Cylindrosporium, Phoma, Sklerotinia, Nematoden |
| Glucanasen | Bakterielle und Pilz-Pathogene wie Cylindrosporium, Phoma, Sklerotinia |
| Doppelstrang-Ribonuclease | Viren |
| Hüllproteine | Viren |
| 17kDa oder 60 kDa Protein | Viren |
| Einschlussproteine des Kerns z.B. a oder b oder Nucleoprotein | Viren |
| Pseudoubiquitin | Viren |
| Replicase | Viren |
| Toxine von Bacillus thuringiensis, VIP 3, Bacillus-cereus-Toxine, Photorabdus und Toxine von Xenorhabdus | Lepidoptera, Blattläuse |
| 3- Hydroxysteroidoxidase | Lepidoptera, Blattläuse |
| Peroxidase | Lepidoptera, Blattläuse |
| Aminopeptidase-Inhibitoren, z.B. Leucin Aminopeptidase-Inhibitor | Lepidoptera, Blattläuse |
| Lektine | Lepidoptera, Blattläuse |
| Protease-Inhibitoren, z.B. Cystatin, Patatin, CPTI | Lepidoptera, Blattläuse |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel- Zystennematoden |

| | |
|---|---|
| Pflanze: Brassica-Gemüse (Kohl, Kohlsprossen etc..) | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol- Oxidase (Antisense) | Bakterielle und Pilz-Pathogene |

| Betroffene Struktur/ Exprimiertes Protein | Merkmal der Pflanze / Toleranz gegenüber |
|---|---|
| Metallothionein | Bakterielle und Pilz-Pathogene |
| Ribonuclease | Bakterielle und Pilz-Pathogene |
| Pilzbekämpfendes Polypeptid AlyAFP | Bakterielle und Pilz-Pathogene |
| Oxalatoxidase | Bakterielle und Pilz-Pathogene |
| Glucoseoxidase | Bakterielle und Pilz-Pathogene |
| Pyrrolnitrinsynthese-Gene | Bakterielle und Pilz-Pathogene |
| Serin/Threonin-Kinasen | Bakterielle und Pilz-Pathogene |
| Cecropin B | Bakterielle und Pilz-Pathogene |
| Phenylalanin-Ammoniak-Lyase (PAL) | Bakterielle und Pilz-Pathogene |
| Cf-Gene, z.B. Cf 9 Cf5 Cf4 Cf2 | Bakterielle und Pilz-Pathogene |
| Osmotin | Bakterielle und Pilz-Pathogene |
| Alpha Hordothionin | Bakterielle und Pilz-Pathogene |
| Systemin | Bakterielle und Pilz-Pathogene |
| Polygalacturonase-Inhibitoren | Bakterielle und Pilz-Pathogene |
| Prf-Steuerungsgen | Bakterielle und Pilz-Pathogene |
| Phytoalexine | Bakterielle und Pilz-Pathogene |
| B-1,3-glucanase (Antisense) | Bakterielle und Pilz-Pathogene |
| Rezeptorkinase | Bakterielle und Pilz-Pathogene |
| Polypeptid mit der Wirkung, eine Über-empfindlichkeitsreaktion auszulösen | Bakterielle und Pilz-Pathogene |
| Gene der systemischen erworbenen Widerstandskraft (SAR) | Virale, bakterielle Pilz- und Nematoden-Pathogene |
| Chitinasen | Bakterielle und Pilz-Pathogene |
| Barnase | Bakterielle und Pilz-Pathogene |
| Glucanasen | Bakterielle und Pilz-Pathogene |
| Doppelstrang-Ribonuclease | Viren |
| Hüllproteine | Viren |
| 17kDa oder 60 kDa Protein | Viren |
| Einschlussproteine des Kerns z.B. a oder b oder Nucleoprotein | Viren |
| Pseudoubiquitin | Viren |
| Replicase | Viren |
| Toxine von Bacillus thuringiensis, VIP 3, Bacillus-cereus-Toxine, Photorabdus und Toxine von Xenorhabdus | Lepidoptera, Blattläuse |
| 3- Hydroxysteroidoxidase | Lepidoptera, Blattläuse |
| Peroxidase | Lepidoptera, Blattläuse |
| Aminopeptidase-Inhibitoren, z.B. Leucin Aminopeptidase-Inhibitor | Lepidoptera, Blattläuse |
| Lektine | Lepidoptera, Blattläuse |
| Protease-Inhibitoren, z.B. Cystatin, Patatin, CPTI | Lepidoptera, Blattläuse |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen | Nematoden, z.B. Wurzelknoten-Nematoden und Wurzel-Zystennematoden |
| induziert werden | Zystennematoden |

| | |
|---|---|
| Pflanzen: Kernobst z.B. Äpfel, Birnen | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |

| Betroffene Struktur/ Exprimiertes Protein | Merkmal der Pflanze / Toleranz gegenüber |
|---|---|
| | -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle und Pilz-Pathogene wie Lagerschorf an Äpfeln oder Feuerbrand |
| Metallothionein | Bakterielle und Pilz-Pathogene wie Lagerschorf an Äpfeln oder Feuerbrand |
| Ribonuclease | Bakterielle und Pilz-Pathogene wie Lagerschorf an Äpfeln oder Feuerbrand |
| Pilzbekämpfendes Polypeptid AlyAFP | Bakterielle und Pilz-Pathogene wie Lagerschorf an Äpfeln oder Feuerbrand |
| Oxalatoxidase | Bakterielle und Pilz-Pathogene wie Lagerschorf an Äpfeln oder Feuerbrand |
| Glucoseoxidase | Bakterielle und Pilz-Pathogene wie Lagerschorf an Äpfeln oder Feuerbrand |
| Pyrrolnitrinsynthese-Gene | Bakterielle und Pilz-Pathogene wie Lagerschorf an Äpfeln oder Feuerbrand |
| Serin/Threonin-Kinasen | Bakterielle und Pilz-Pathogene wie Lagerschorf an Äpfeln oder Feuerbrand |
| Cecropin B | Bakterielle und Pilz-Pathogene wie Lagerschorf an Äpfeln oder Feuerbrand |
| Phenylalanin-Ammoniak-Lyase (PAL) | Bakterielle und Pilz-Pathogene wie Lagerschorf an Äpfeln oder Feuerbrand |
| Cf-Gene, z.B. Cf 9 Cf5 Cf4 Cf2 | Bakterielle und Pilz-Pathogene wie Lagerschorf an Äpfeln oder Feuerbrand |
| Osmotin | Bakterielle und Pilz-Pathogene wie Lagerschorf an Äpfeln oder Feuerbrand |
| Alpha Hordothionin | Bakterielle und Pilz-Pathogene wie Lagerschorf an Äpfeln oder Feuerbrand |
| Systemin | Bakterielle und Pilz-Pathogene wie Lagerschorf an Äpfeln oder Feuerbrand |
| Polygalacturonase-Inhibitoren | Bakterielle und Pilz-Pathogene wie Lagerschorf an Äpfeln oder Feuerbrand |
| Prf-Steuerungsgen | Bakterielle und Pilz-Pathogene wie Lagerschorf an Äpfeln oder Feuerbrand |
| Phytoalexine | Bakterielle und Pilz-Pathogene wie Lagerschorf an Äpfeln oder Feuerbrand |
| B-1,3-glucanase (Antisense) | Bakterielle und Pilz-Pathogene wie Lagerschorf an Äpfeln oder Feuerbrand |
| Rezeptorkinase | Bakterielle und Pilz-Pathogene wie Lagerschorf an Äpfeln oder Feuerbrand |
| Polypeptid mit der Wirkung, eine Überempfindlichkeitsreaktion auszulösen | Bakterielle und Pilz-Pathogene wie Lagerschorf an Äpfeln oder Feuerbrand |
| Gene der systemischen erworbenen Widerstandskraft (SAR) | Virale, bakterielle Pilz- und Nematoden-Pathogene |
| lytisch wirkendes Protein | Bakterielle und Pilz-Pathogene wie Lagerschorf an Äpfeln oder Feuerbrand |
| Lysozym | Bakterielle und Pilz-Pathogene wie Lagerschorf an Äpfeln oder Feuerbrand |
| Chitinasen | Bakterielle und Pilz-Pathogene wie Lagerschorf an Äpfeln oder Feuerbrand |
| Barnase | Bakterielle und Pilz-Pathogene wie Lagerschorf an Äpfeln oder Feuerbrand |
| Glucanasen | Bakterielle und Pilz-Pathogene wie Lagerschorf an Äpfeln oder Feuerbrand |
| Doppelstrang-Ribonuclease | Viren |
| Hüllproteine | Viren |
| 17kDa oder 60 kDa Protein | Viren |
| Einschlussproteine des Kerns z.B. a oder b oder Nucleoprotein | Viren |
| Pseudoubiquitin | Viren |
| Replicase | Viren |
| Toxine von Bacillus thuringiensis, VIP 3, Bacillus-cereus-Toxine, Photorabdus und Toxine von Xenorhabdus | Lepidoptera, Blattläuse, Milben |
| 3- Hydroxysteroidoxidase | Lepidoptera, Blattläuse, Milben |
| Peroxidase | Lepidoptera, Blattläuse, Milben |
| Aminopeptidase-Inhibitoren, z.B. Leucin Aminopeptidase-Inhibitor | Lepidoptera, Blattläuse, Milben |
| Lektine | Lepidoptera, Blattläuse, Milben |
| Protease-Inhibitoren, z.B. Cystatin, Patatin, CPTI | Lepidoptera, Blattläuse, Milben |
| Ribosomeninaktivierendes Protein | Lepidoptera, Blattläuse, Milben |
| Stilbensynthase | Lepidoptera, Blattläuse, Krankheiten, Milben |
| HMG-CoA-Reductase | Lepidoptera, Blattläuse, Milben |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen induziert werden | Wurzel-Zystennematoden |

| | |
|---|---|
| Pflanze: Melone | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |

| Betroffene Struktur/ Exprimiertes Protein | Merkmal der Pflanze / Toleranz gegenüber |
|---|---|
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene wie Phytophtora |
| Metallothionein | Bakterielle oder Pilz-Pathogene wie Phytophtora |
| Ribonuclease | Bakterielle oder Pilz-Pathogene wie Phytophtora |
| Pilzbekämpfendes Polypeptid AlyAFP | Bakterielle oder Pilz-Pathogene wie Phytophtora |
| Oxalatoxidase | Bakterielle oder Pilz-Pathogene wie Phytophtora |
| Glucoseoxidase | Bakterielle oder Pilz-Pathogene wie Phytophtora |
| Pyrrolnitrinsynthesegene | Bakterielle oder Pilz-Pathogene wie Phytophtora |
| Serin/Threonin-Kinasen | Bakterielle oder Pilz-Pathogene wie Phytophtora |
| Cecropin B | Bakterielle oder Pilz-Pathogene wie Phytophtora |
| Phenylalanin-Ammoniak-Lyase (PAL) | Bakterielle oder Pilz-Pathogene wie Phytophtora |
| Cf-Gene, z.B. Cf 9 Cf5 Cf4 Cf2 | Bakterielle oder Pilz-Pathogene wie Phytophtora |
| Osmotin | Bakterielle oder Pilz-Pathogene wie Phytophtora |
| Alpha Hordothionin | Bakterielle oder Pilz-Pathogene wie Phytophtora |
| Systemin | Bakterielle oder Pilz-Pathogene wie Phytophtora |
| Polygalacturonase-Inhibitoren | Bakterielle oder Pilz-Pathogene wie Phytophtora |
| Prf-Steuerungsgen | Bakterielle oder Pilz-Pathogene wie Phytophtora |
| Phytoalexine | Bakterielle oder Pilz-Pathogene wie Phytophtora |
| B-1,3-glucanase (Antisense) | Bakterielle oder Pilz-Pathogene wie Phytophtora |
| Rezeptorkinase | Bakterielle oder Pilz-Pathogene wie Phytophtora |
| Polypeptid mit der Wirkung, eine Über-empfindlichkeitsreaktion auszulösen | Bakterielle oder Pilz-Pathogene wie Phytophtora |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene wie Phytophtora |
| Lysozym | Bakterielle oder Pilz-Pathogene wie Phytophtora |
| Chitinasen | Bakterielle oder Pilz-Pathogene wie Phytophtora |
| Barnase | Bakterielle oder Pilz-Pathogene wie Phytophtora |
| Glucanasen | Bakterielle oder Pilz-Pathogene wie Phytophtora |
| Doppelstrang-Ribonuclease | Viren wie CMV, PRSV, WMV2, SMV, ZYMV |
| Hüllproteine | Viren wie CMV, PRSV, WMV2, SMV, |
| | ZYMV |
| 17kDa oder 60 kDa Protein | Viren wie CMV, PRSV, WMV2, SMV, ZYMV |
| Einschlussproteine des Kerns z.B. a oder b oder Nucleoprotein | Viren wie CMV, PRSV, WMV2, SMV, ZYMV |
| Pseudoubiquitin | Viren wie CMV, PRSV, WMV2, SMV, ZYMV |
| Replicase | Viren wie CMV, PRSV, WMV2, SMV, ZYMV |
| Toxine von Bacillus thuringiensis, VIP 3, Bacillus-cereus-Toxine, Photorabdus und Toxine von Xenorhabdus | Lepidoptera, Blattläuse, Milben |
| 3- Hydroxysteroidoxidase | Lepidoptera, Blattläuse, Milben, weiße Fliege |
| Peroxidase | Lepidoptera, Blattläuse, Milben, weiße Fliege |
| Aminopeptidase-Inhibitoren, z.B. Leucin Aminopeptidase-Inhibitor | Lepidoptera, Blattläuse, Milben, weiße Fliege |
| Lektine | Lepidoptera, Blattläuse, Milben, weiße Fliege |
| Protease-Inhibitoren, z.B. Cystatin, Patatin, CPTI, Virgiferin | Lepidoptera, Blattläuse, Milben, weiße Fliege |
| Ribosomeninaktivierendes Protein | Lepidoptera, Blattläuse, Milben, weiße Fliege |
| Stilbensynthase | Lepidoptera, Blattläuse, Milben, weiße Fliege |
| HMG-CoA-Reductase | Lepidoptera, Blattläuse, Milben, weiße Fliege |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

| | |
|---|---|
| Pflanze: Banane | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, |

| Betroffene Struktur/ Exprimiertes Protein | Merkmal der Pflanze / Toleranz gegenüber |
|---|---|
| | Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Über-empfindlichkeitsreaktion auszulösen | Bakterielle oder Pilz-Pathogene |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie das Banana Bunchy Top Virus (BBTV) |
| Hüllproteine | Viren wie das Banana Bunchy Top Virus (BBTV) |
| 17kDa oder 60 kDa Protein | Viren wie das Banana Bunchy Top Virus (BBTV) |
| Einschlussproteine des Kerns z.B. a oder b oder Nucleoprotein | Viren wie das Banana Bunchy Top Virus (BBTV) |
| Pseudoubiquitin | Viren wie das Banana Bunchy Top Virus (BBTV) |
| Replicase | Viren wie das Banana Bunchy Top Virus (BBTV) |
| Toxine von Bacillus thuringiensis, VIP 3, Bacillus-cereus-Toxine, Photorabdus und Toxine von Xenorhabdus | Lepidoptera, Blattläuse, Milben, Nematoden |
| 3- Hydroxysteroidoxidase | Lepidoptera, Blattläuse, Milben, Nematoden |
| Peroxidase | Lepidoptera, Blattläuse, Milben, Nematoden |
| Aminopeptidase-Inhibitoren, z.B. Leucin | Lepidoptera, Blattläuse, Milben, Nematoden |
| Aminopeptidase-Inhibitor | |
| Lektine | Lepidoptera, Blattläuse, Milben, Nematoden |
| Protease-Inhibitoren, z.B. Cystatin, Patatin, CPTI, Virgiferin | Lepidoptera, Blattläuse, Milben, Nematoden |
| Ribosomeninaktivierendes Protein | Lepidoptera, Blattläuse, Milben, Nematoden |
| Stilbensynthase | Lepidoptera, Blattläuse, Milben, Nematoden |
| HMG-CoA-Reductase | Lepidoptera, Blattläuse, Milben, Nematoden |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

| | |
|---|---|
| Pflanze: Baumwolle | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Arykoxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Überempfindlichkeitsreaktion auszulösen | Bakterielle oder Pilz-Pathogene |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie das Wundtumorvirus (WTV) |
| Hüllproteine | Viren wie das Wundtumorvirus (WTV) |
| 17kDa oder 60 kDa Protein | Viren wie das Wundtumorvirus (WTV) |
| Einschlussproteine des Kerns z.B. a oder b oder Nucleoprotein | Viren wie das Wundtumorvirus (WTV) |
| Pseudoubiquitin | Viren wie das Wundtumorvirus (WTV) |
| Replicase | Viren wie das Wundtumorvirus (WTV) |
| Toxine von Bacillus thuringiensis, VIP 3, Bacillus-cereus-Toxine, Photorabdus und Toxine von Xenorhabdus | Lepidoptera, Blattläuse, Milben, Nematoden, weiße Fliege |
| 3- Hydroxysteroidoxidase | Lepidoptera, Blattläuse, Milben, Nematoden, weiße Fliege |
| Peroxidase | Lepidoptera, Blattläuse, Milben, Nematoden, weiße Fliege |
| Aminopeptidase-Inhibitoren, z.B. Leucin Aminopeptidase-Inhibitor | Lepidoptera, Blattläuse, Milben, Nematoden, weiße Fliege |
| Lektine | Lepidoptera, Blattläuse, Milben, Nematoden, weiße Fliege |
| Protease-Inhibitoren, z.B. Cystatin, Patatin, CPTI, Virgiferin | Lepidoptera, Blattläuse, Milben, Nematoden, weiße Fliege |
| Ribosomeninaktivierendes Protein | Lepidoptera, Blattläuse, Milben, Nematoden, weiße Fliege |
| Stilbensynthase | Lepidoptera, Blattläuse, Milben, Nematoden, weiße Fliege |
| HMG-CoA-Reductase | Lepidoptera, Blattläuse, Milben, Nematoden, weiße Fliege |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

| | |
|---|---|
| | |

| Pflanze: Zuckerrohr | |
|---|---|
| | |
| Betroffene Merkmal Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |

| Betroffene Merkmal/ Exprimiertes Protein | Merkmal der Pflanze / Toleranz gegenüber |
|---|---|
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Über-empfindlichkeitsreaktion auszulösen | Bakterielle oder Pilz-Pathogene |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene |
| Lysozym | Bakterielle oder Pilz-Pathogene, z.B. Clavibacter |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie SCMV, SrMV |
| Hüllproteine | Viren wie SCMV, SrMV |
| 17kDa oder 60 kDa Protein | Viren wie SCMV, SrMV |
| Einschlussproteine des Kerns z.B. a oder b oder Nucleoprotein | Viren wie SCMV, SrMV |
| Pseudoubiquitin | Viren wie SCMV, SrMV |
| Replicase | Viren wie SCMV, SrMV |
| Toxine von Bacillus thuringiensis, VIP 3, | Lepidoptera, Blattläuse, Milben, Nematoden, |
| Bacillus-cereus-Toxine, Photorabdus und | weiße Fliege, Käfer wie z.B. der mexikanische |
| Toxine von Xenorhabdus | Reisbohrer |
| 3- Hydroxysteroidoxidase | Lepidoptera, Blattläuse, Milben, Nematoden, weiße Fliege, Käfer wie z.B. der mexikanische Reisbohrer |
| Peroxidase | Lepidoptera, Blattläuse, Milben, Nematoden, |
| | weiße Fliege, Käfer wie z.B. der mexikanische Reisbohrer |
| Aminopeptidase-Inhibitoren, z.B. Leucin Aminopeptidase-Inhibitor | Lepidoptera, Blattläuse, Milben, Nematoden, weiße Fliege, Käfer wie z.B. der mexikanische Reisbohrer |
| Lektine | Lepidoptera, Blattläuse, Milben, Nematoden, weiße Fliege, Käfer wie z.B. der mexikanische Reisbohrer |
| Protease-Inhibitoren, z.B. Cystatin, Patatin, CPTI, Virgiferin | Lepidoptera, Blattläuse, Milben, Nematoden, weiße Fliege, Käfer wie z.B. der mexikanische Reisbohrer |
| Ribosomeninaktivierendes Protein | Lepidoptera, Blattläuse, Milben, Nematoden, weiße Fliege, Käfer wie z.B. der mexikanische Reisbohrer |
| Stilbensynthase | Lepidoptera, Blattläuse, Milben, Nematoden, weiße Fliege, Käfer wie z.B. der mexikanische Reisbohrer |
| HMG-CoA-Reductase | Lepidoptera, Blattläuse, Milben, Nematoden, weiße Fliege, Käfer wie z.B. der mexikanische Reisbohrer |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

| | |
|---|---|
| Pflanze: Sonnenblume | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene, z.B. Sklerotinia |
| Glucoseoxidase | Bakterielle oder Pilz-Pathogene |

| Betroffene Struktur/ Exprimiertes Protein | Merkmal der Pflanze / Toleranz gegenüber |
|---|---|
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Überempfindlichkeitsreaktion auszulösen | Bakterielle oder Pilz-Pathogene |
| Gene der systemischen erworbenen Widerstandskraft (SAR) | Virale, bakterielle Pilz- und Nematoden-Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie CMV, TMV |
| Hüllproteine | Viren wie CMV, TMV |
| 17kDa oder 60 kDa Protein | Viren wie CMV, TMV |
| Einschlussproteine des Kerns z.B. a oder b oder Nucleoprotein | Viren wie CMV, TMV |
| Pseudoubiquitin | Viren wie CMV, TMV |
| Replicase | Viren wie CMV, TMV |
| Toxine von Bacillus thuringiensis, VIP 3, Bacillus-cereus-Toxine, Photorabdus und Toxine von Xenorhabdus | Lepidoptera, Blattläuse, Milben, Nematoden, weiße Fliege, Käfer |
| 3- Hydroxysteroidoxidase | Lepidoptera, Blattläuse, Milben, Nematoden, weiße Fliege, Käfer |
| Peroxidase | Lepidoptera, Blattläuse, Milben, Nematoden, |
| | weiße Fliege, Käfer |
| Aminopeptidase-Inhibitoren, z.B. Leucin Aminopeptidase-Inhibitor | Lepidoptera, Blattläuse, Milben, Nematoden, weiße Fliege, Käfer |
| Lektine | Lepidoptera, Blattläuse, Milben, Nematoden, weiße Fliege, Käfer |
| Protease-Inhibitoren, z.B. Cystatin, Patatin, CPTI, Virgiferin | Lepidoptera, Blattläuse, Milben, Nematoden, weiße Fliege, Käfer |
| Ribosomeninaktivierendes Protein | Lepidoptera, Blattläuse, Milben, Nematoden, weiße Fliege, Käfer |
| Stilbensynthase | Lepidoptera, Blattläuse, Milben, Nematoden, weiße Fliege, Käfer |
| HMG-CoA-Reductase | Lepidoptera, Blattläuse, Milben, Nematoden, weiße Fliege, Käfer |
| Schlüpfauslösefaktor für Zystennematoden | Zystennematoden |
| Barnase | Nematoden, z.B. Wurzelknoten-Nematoden und Zystennematoden |
| CBI | Wurzelknotennematoden |
| Prinzipien zur Verhinderung der Nahrungsaufnahmen, die an Nematoden-Nährstellen induziert werden | Nematoden, z.B. Wurzelknoten-Nematoden und Wurzel-Zystennematoden |

| | |
|---|---|
| Pflanzen: Zuckerrübe, Rüben | |
| | |
| Betroffene Struktur/ Exprimiertes Protein | Merkmal der Pflanze / Toleranz gegenüber |
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |

| Betroffene Struktur/ Exprimiertes Protein | Merkmal der Pflanze / Toleranz gegenüber |
|---|---|
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, zyklische Imide, Phenylpyrazole, Pyridinderivate, Phenopylat, Oxadiazole usw. |
| Cytochrom P450 z.B. P450 SU1 oder Auswahl | Xenobiotika und Herbizide wie etwa Sulfonylharnstoffverbindungen |
| Polyphenoloxidase oder Polyphenol-Oxidase (Antisense) | Bakterielle oder Pilz-Pathogene |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene, z.B. Sklerotinia |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Betroffene Struktur / exprimiertes Prinzip | Merkmal der Pflanze / Toleranz gegenüber |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz_Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| AX + WIN-Proteine | Bakterielle und Pilz-Pathogene wie Cercospora beticola |
| Rezeptorkinase | Bakterielle oder Pilz-Pathogene |
| Polypeptid mit der Wirkung, eine Überempfindlichkeitsreaktion auszulösen | Bakterielle oder Pilz-Pathogene |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie etwa BNYVV |
| Hüllproteine | Viren wie etwa BNYVV |
| 17kDa oder 60 kDa Protein | Viren wie etwa BNYVV |
| Einschlussproteine des Kerns z.B. a oder b oder Nucleoprotein | Viren wie etwa BNYVV |
| Pseudoubiquitin | Viren wie etwa BNYVV |
| Replicase | Viren wie etwa BNYVV |
| Toxine von Bacillus thuringiensis, VIP 3, Bacillus-cereus-Toxine, Photorabdus und Toxine von Xenorhabdus | Lepidoptera, Blattläuse, Milben, Nematoden, weiße Fliege, Käfer, Wurzelfliegen |
| 3- Hydroxysteroidoxidase | Lepidoptera, Blattläuse, Milben, Nematoden, weiße Fliege, Käfer, Wurzelfliegen |
| Peroxidase | Lepidoptera, Blattläuse, Milben, Nematoden, weiße Fliege, Käfer, Wurzelfliegen |
| Aminopeptidase-Inhibitoren, z.B. Leucin Aminopeptidase-Inhibitor | Lepidoptera, Blattläuse, Milben, Nematoden, weiße Fliege, Käfer, Wurzelfliegen |
| Lektine | Lepidoptera, Blattläuse, Milben, Nematoden, weiße Fliege, Käfer, Wurzelfliegen |
| Protease-Inhibitoren, z.B. Cystatin, Patatin, CPTI, Virgiferin | Lepidoptera, Blattläuse, Milben, Nematoden, weiße Fliege, Käfer, Wurzelfliegen |
| Ribosomeninaktivierendes Protein | Lepidoptera, Blattläuse, Milben, Nematoden, weiße Fliege, Käfer, Wurzelfliegen |
| Stilbensynthase | Lepidoptera, Blattläuse, Milben, Nematoden, |
| | weiße Fliege, Käfer, Wurzelfliegen |
| HMG-CoA-Reductase | Lepidoptera, Blattläuse, Milben, Nematoden, weiße Fliege, Käfer, Wurzelfliegen |
| Schlüpfauslösefaktor für Zystennematoden | Zystennematoden |
| Barnase | Nematoden, z.B. Wurzelknoten-Nematoden und Zystennematoden |
| Resistenz-Stelle für Zystennematoden der Rüben | Zystennematoden |
| CBI | Wurzelknotennematoden |
| Prinzipien zur Verhinderung der Nahrungsaufnahmen, die Nahrungsaufnahmen, die induziert werden | Nematoden, z.B. Wurzelknoten-Nematoden und Wurzel-Zystennematoden |

**Tabelle 2**

| Die folgenden Abkürzungen wurden in der Tabelle benutzt: | |
|---|---|
| Aktives Prinzip der transgenen Pflanze: AP | |
| Photorhabdus luminescens: PL | |
| Xenorhabdus nematophilus: XN | |
| Proteinase-Inhibitoren: Plnh. | |
| Pflanzenlektine PLec. | |
| Agglutinine: Aggl. | |
| 3-Hydroxysteroidoxidase: HO | |
| Cholesterinoxidase: CO | |
| Chitinase: CH | |
| Glucanase: GL | |
| Stilbensynthase SS | |

| AP | Kontrolle von |
|---|---|
| CrylA(a) | Adoxophyes spp. |
| CrylA(a) | Agrotis spp. |
| CrylA(a) | Alabama argiliaceae |
| CrylA(a) | Anticarsia gemmatalis |
| CrylA(a) | Chilo spp. |
| CrylA(a) | Clysia ambiguella |
| CrylA(a) | Crocidolomia binotalis |
| CrylA(a) | Cydia spp. |
| CrylA(a) | Diparopsis castanea |
| CrylA(a) | Earias spp. |
| CrylA(a) | Ephestia spp. |
| CrylA(a) | Heliothis spp. |
| CrylA(a) | Heliula undalis |
| CrylA(a) | Keiferia lycopersicella |
| CrylA(a) | Leucoptera scitella |
| CrylA(a) | Lithocollethis spp. |
| CrylA(a) | Lobesia botrana |
| CrylA(a) | Ostrinia nubilalis |
| CrylA(a) | Pandemis spp. |
| CrylA(a) | Pectinophora gossyp. |
| CrylA(a) | Phyllocnistis citrella |
| CrylA(a) | Pieris spp. |
| CrylA(a) | Plutella xylostella |
| CrylA(a) | Scirpophaga spp. |
| CrylA(a) | Sesamia spp. |
| CrylA(a) | Sparganothis spp. |
| CrylA(a) | Spodoptera spp. |
| CrylA(a) | Tortrix spp. |
| CrylA(a) | Trichoplusia ni |
| CrylA(a) | Agriotes spp. |
| CrylA(a) | Anthonomus grandis |
| CrylA(a) | Curculio spp. |
| CrylA(a) | Diabrotica balteata |
| CrylA(a) | Leptinotarsa spp. |
| CrylA(a) | Lissorhoptrus spp. |
| CrylA(a) | Otiorhynchus spp. |
| CrylA(a) | Aleurothrixus spp. |
| CrylA(a) | Aleyrodes spp. |
| CrylA(a) | Aonidiella spp. |
| CrylA(a) | Aphididea spp. |
| CrylA(a) | Aphis spp. |
| CrylA(a) | Bemisia tabaci |
| CrylA(a) | Empoasca spp. |
| CrylA(a) | Mycus spp. |
| CrylA(a) | Nephotettix spp. |
| CrylA(a) | Nilaparvata spp. |
| CrylA(a) | Pseudococcus spp. |
| CrylA(a) | Psylla spp. |
| CrylA(a) | Quadraspidiotus spp. |
| CrylA(a) | Schizaphis spp. |
| CrylA(a) | Trialeurodes spp. |
| CrylA(a) | Lyriomyza spp. |
| CrylA(a) | Oscinella spp. |
| CrylA(a) | Phorbia spp. |
| CrylA(a) | Frankliniella spp. |
| CrylA(a) | Thrips spp. |
| CrylA(a) | Scirtothrips aurantii |
| CrylA(a) | Aceria spp. |
| CrylA(a) | Aculus spp. |
| CrylA(a) | Brevipaipus spp. |
| CrylA(a) | Panonychus spp. |
| CrylA(a) | Phyllocoptruta spp. |
| CrylA(a) | Tetranychus spp. |
| CrylA(a) | Heterodera spp. |
| CrylA(a) | Meloidogyne spp. |
| CrylA(b) | Adoxophyes spp |
| CrylA(b) | Agrotis spp |
| CrylA(b) | Alabama argillaceae |
| CrylA(b) | Anticarsia gemmatalis |
| CrylA(b) | Chilo spp. |
| CrylA(b) | Ciysia ambiguella |
| CrylA(b) | Crocidolomia binotaiis |
| CrylA(b) | Cydia spp. |
| CrylA(b) | Diparopsis castanea |
| CrylA(b) | Earias spp. |
| CrylA(b) | Ephestia spp. |
| CrylA(b) | Heliothis spp. |
| CrylA(b) | Hellula undalis |
| CrylA(b) | Keiferia lycopersicella |
| CrylA(b) | Leucoptera scitella |
| CrylA(b) | Lithocollethis spp. |
| CrylA(b) | Lobesia botrana |
| CrylA(b) | Ostrinia nubilalis |
| CrylA(b) | Pandemis spp. |
| CrylA(b) | Pectinophora gossyp. |
| CrylA(b) | Phyllocnistis citrella |
| CrylA(b) | Pieris spp. |
| CrylA(b) | Plutelia xyiostella |
| CrylA(b) | Scirpophaga spp. |
| CrylA(b) | Sesamia spp. |
| CrylA(b) | Sparganothis spp. |
| CrylA(b) | Spodoptera spp. |
| CrylA(b) | Tortrix spp. |
| CrylA(b) | Trichoplusia ni |
| CrylA(b) | Agriotes spp. |
| CrylA(b) | Anthonomus grandis |
| CrylA(b) | Curculio spp. |
| CrylA(b) | Diabrotica balteata |
| CrylA(b) | Leptinotarsa spp. |
| CrylA(b) | Lissorhoptrus spp. |
| CrylA(b) | Otiorhynchus spp. |
| CrylA(b) | Aleurothrixus spp. |
| CrylA(b) | Aleyrodes spp. |
| CrylA(b) | Aonidiella spp. |
| CrylA(b) | Aphididae spp. |
| CrylA(b) | Aphis spp. |
| CrylA(b) | Bemisia tabaci |
| CrylA(b) | Empoasca spp. |
| CrylA(b) | Mycus spp. |
| CrylA(b) | Nephotettix spp. |
| CrylA(b) | Nilaparvata spp. |
| CrylA(b) | Pseudococcus spp. |
| CrylA(b) | Psylla spp. |
| CrylA(b) | Quadraspidiotus spp. |
| CrylA(b) | Schizaphis spp. |
| CrylA(b) | Trialeurodes spp. |
| CrylA(b) | Lyriomyza spp. |
| CrylA(b) | Oscinella spp. |
| CrylA(b) | Phorbia spp. |
| CrylA(b) | Frankliniella spp. |
| CrylA(b) | Thrips spp. |
| CrylA(b) | Scirtothrips aurantii |
| CrylA(b) | Aceria spp. |
| CrylA(b) | Aculus spp. |
| CrylA(b) | Brevipalpus spp. |
| CrylA(b) | Panonychus spp. |
| CrylA(b) | Phyllocoptruta spp. |
| CrylA(b) | Tetranychus spp. |
| CrylA(b) | Heterodera spp. |
| CrylA(b) | Meloidogyne spp. |
| CrylA(c) | Adoxophyes spp. |
| CrylA(c) | Agrotis spp. |
| CrylA(c) | Alabama argillaceae |
| CrylA(c) | Anticarsia gemmatalis |
| CrylA(c) | Chilo spp. |
| CrylA(c) | Ciysia ambiguella |
| CrylA(c) | Crocidolomia binotalis |
| CrylA(c) | Cydia spp. |
| CrylA(c) | Diparopsis castanea |
| CrylA(c) | Earias spp. |
| CrylA(c) | Ephestia spp. |
| CrylA(c) | Heliothis spp. |
| CrylA(c) | Hellula undalis |
| CrylA(c) | Keiferia lycopersicella |
| CrylA(c) | Leucoptera scitella |
| CrylA(c) | Lithocollethis spp. |
| CrylA(c) | Lobesia botrana |
| CrylA(c) | Ostrinia nubilalis |
| CrylA(c) | Pandemis spp. |
| CrylA(c) | Pectinophora gossypielia. |
| CrylA(c) | Phyllocnistis citrella |
| CrylA(c) | Pieris spp. |
| CrylA(c) | Plutella xyiostella |
| CrylA(c) | Scirpophaga spp. |
| CrylA(c) | Sesamia spp. |
| CrylA(c) | Sparganothis spp. |
| CrylA(c) | Spodoptera spp. |
| CrylA(c) | Tortrix spp. |
| CrylA(c) | Trichoplusia ni |
| CrylA(c) | Agriotes spp. |
| CrylA(c) | Anthonomus grandis |
| CrylA(c) | Curculio spp. |
| CrylA(c) | Diabrotica baiteata |
| CrylA(c) | Leptinotarsa spp. |
| CrylA(c) | Lissorhoptrus spp. |
| CrylA(c) | Otiorhynchus spp. |
| CrylA(c) | Aleurothrixus spp. |
| CrylA(c) | Aleyrodes spp. |
| CrylA(c) | Aonidiella spp. |
| CrylA(c) | Aphididae spp. |
| CrylA(c) | Aphis spp. |
| CrylA(c) | Bemisia tabaci |
| CrylA(c) | Empoasca spp. |
| CrylA(c) | Mycus spp. |
| CrylA(c) | Nephotettix spp. |
| CrylA(c) | Nilaparvata spp. |
| CrylA(c) | Pseudococcus spp. |
| CrylA(c) | Psylla spp. |
| CrylA(c) | Quadraspidiotus spp. |
| CrylA(c) | Schizaphis spp. |
| CrylA(c) | Trialeurodes spp. |
| CrylA(c) | Lyriomyza spp. |
| CrylA(c) | Oscinelia spp. |
| CrylA(c) | Phorbia spp. |
| CrylA(c) | Frankiiniella spp. |
| CrylA(c) | Thrips spp. |
| CrylA(c) | Scirtothrips aurantii |
| CrylA(c) | Aceria spp. |
| CrylA(c) | Aculus spp. |
| CrylA(c) | Brevipalpus spp. |
| CrylA(c) | Panonychus spp. |
| CrylA(c) | Phyllocoptruta spp. |
| CrylA(c) | Tetranychus spp. |
| CrylA(c) | Heterodera spp. |
| CrylA(c) | Meloidogyne spp. |
| CryllA | Adoxophyes spp. |
| CryllA | Agrotis spp. |
| CryllA | Alabama argillaceae |
| CryllA | Anticarsia gemmatalis |
| CryllA | Chilo spp. |
| CryllA | Clysia ambiguella |
| CryllA | Crocidolomia binotalis |
| CryllA | Cydia spp. |
| CryllA | Diparopsis castanea |
| CryllA | Earias spp. |
| CryllA | Ephestia spp. |
| CryllA | Heliothis spp. |
| CryllA | Hellula undalis |
| CryllA | Keiferia lycopersicella |
| CryllA | Leucoptera scitella |
| CryllA | Lithocoliethis spp. |
| CryllA | Lobesia botrana |
| CryllA | Ostrinia nubilalis |
| CryllA | Pandemis spp. |
| CryllA | Pectinophora gossyp. |
| CryllA | Phyllocnistis citrella |
| CryllA | Pieris spp. |
| CryllA | Plutella xylostella |
| CryllA | Scirpophaga spp. |
| CryllA | Sesamia spp. |
| CryllA | Sparganothis spp. |
| CryllA | Spodoptera spp. |
| CryllA | Tortrix spp. |
| CryllA | Trichoplusia ni |
| CryllA | Agriotes spp. |
| CryllA | Anthonomus grandis |
| CryllA | Curculio spp. |
| CryllA | Diabrotica balteata |
| CryllA | Leptinotarsa spp. |
| CryllA | Lissorhoptrus spp. |
| CryllA | Otiorhynchus spp. |
| CryllA | Aleurothrixus spp. |
| CryllA | Aleyrodes spp. |
| CryllA | Aonidiella spp. |
| CryllA | Aphididae spp. |
| CryllA | Aphis spp. |
| CryllA | Bemisia tabaci |
| CryllA | Empoasca spp. |
| CryllA | Mycus spp. |
| CryllA | Nephotettix spp. |
| CryllA | Nilaparvata spp. |
| CryllA | Pseudococcus spp. |
| CryllA | Psyila spp. |
| CryllA | Quadraspidiotus spp. |
| CryllA | Schizaphis spp. |
| CryllA | Trialeurodes spp. |
| CryllA | Lyriomyza spp. |
| CryllA | Oscinella spp. |
| CryllA | Phorbia spp. |
| CryllA | Frankliniella spp. |
| CryllA | Thrips spp. |
| CryllA | Scirtothrips aurantii |
| CryllA | Aceria spp. |
| CryllA | Acutus spp. |
| CryllA | Brevipalpus spp. |
| CryllA | Panonychus spp. |
| CryllA | Phyllocoptruta spp. |
| CryllA | Tetranychus spp. |
| CryllA | Heterodera spp. |
| CryllA | Meloidogyne spp. |
| CrylllA | Adoxophyes spp. |
| CrylllA | Agrotis spp. |
| CrylllA | Alabama argiiiaceae |
| CrylllA | Anticarsia gemmataiis |
| CrylllA | Chilo spp. |
| CrylllA | Ciysia ambiguelia |
| CrylllA | Crocodolomia binotalis |
| CrylllA | Cydia spp. |
| CrylllA | Diparopsis castanea |
| CrylllA | Earias spp. |
| CrylllA | Ephestia spp. |
| CrylllA | Heliothis spp. |
| CrylllA | Hellula undalis |
| CrylllA | Keiferia lycopersicella |
| CrylllA | Leucoptera scitella |
| CrylllA | Lithocollethis spp. |
| CrylllA | Lobesia botrana |
| CrylllA | Ostrinia nubilalis |
| CrylllA | Pandemis spp. |
| CrylllA | Pectinophora gossyp. |
| CrylllA | Phyllocnistis citrella |
| CrylllA | Pieris spp. |
| CrylllA | Plutella xylostella |
| CrylllA | Scirpophaga spp. |
| CrylllA | Sesamia spp. |
| CrylllA | Sparganothis spp. |
| CrylllA | Spodoptera spp. |
| CrylllA | Tortrix spp. |
| CrylllA | Trichoplusia ni |
| CrylllA | Agriotes spp. |
| CrylllA | Anthonomus grandis |
| CrylllA | Curculio spp. |
| CrylllA | Diabrotica balteata |
| CrylllA | Leptinotarsa spp. |
| CrylllA | Lissorhoptrus spp. |
| CrylllA | Otiorhynchus spp. |
| CrylllA | Aleurothrixus spp. |
| CrylllA | Aleyrodes spp. |
| CrylllA | Aonidiella spp. |
| CrylllA | Aphididae spp. |
| CrylllA | Aphis spp. |
| CrylllA | Bemisia tabaci |
| CrylllA | Empoasca spp. |
| CrylllA | Mycus spp. |
| CrylllA | Nephotettix spp. |
| CrylllA | Nilaparvata spp. |
| CrylllA | Pseudococcus spp. |
| CrylllA | Psylla spp. |
| CrylllA | Quadraspidiotus spp. |
| CrylllA | Schizaphis spp. |
| CrylllA | Trialeurodes spp. |
| CrylllA | Lyriomyza spp. |
| CrylllA | Oscinella spp. |
| CrylllA | Phorbia spp. |
| CrylllA | Frankliniella spp. |
| CrylllA | Thrips spp. |
| CrylllA | Scirtothrips aurantii |
| CrylllA | Aceria spp. |
| CrylllA | Aculus spp. |
| CrylllA | Brevipalpus spp. |
| CrylllA | Panonychus spp. |
| CrylllA | Phyllocoptruta spp. |
| CrylllA | Tetranychus spp. |
| CrylllA | Heterodera spp. |
| CrylllA | Meloidogyne spp. |
| CrylllB2 | Adoxophyes spp. |
| CrylllB2 | Agrotis spp. |
| CrylllB2 | Alabama argiilaceae |
| CrylllB2 | Anticarsia gemmatalis |
| CrylllB2 | Chilo spp. |
| CrylllB2 | Clysia ambiguella |
| CrylllB2 | Crocidolomia binotaiis |
| CrylllB2 | Cydia spp. |
| CrylllB2 | Diparopsis castanea |
| CrylllB2 | Earias spp. |
| CrylllB2 | Ephestia spp. |
| CrylllB2 | Heliothis spp. |
| CrylllB2 | Hellula undalis |
| CrylllB2 | Keiferia lycopersicella |
| CrylllB2 | Leucoptera sectelia |
| CrylllB2 | Lithocollethis spp. |
| CrylllB2 | Lobesia botrana |
| CrylllB2 | Ostrinia nubilalis |
| CrylllB2 | Pandemis spp. |
| CrylllB2 | Pectinophora gossyp. |
| CrylllB2 | Phyllocnistis citrella |
| CrylllB2 | Pieris spp. |
| CrylllB2 | Plutella xylostella |
| CrylllB2 | Scirpophaga spp. |
| CrylllB2 | Sesamia spp. |
| CrylllB2 | Sparganothis spp. |
| CrylllB2 | Spodoptera spp. |
| CrylllB2 | Tortrix spp. |
| CrylllB2 | Trichoplusia ni |
| CrylllB2 | Agriotes spp. |
| CrylllB2 | Anthonomus grandis |
| CrylllB2 | Curculio spp. |
| CrylllB2 | Diabrotica balteata |
| CrylllB2 | Leptinotarsa spp. |
| CrylllB2 | Lissorhoptrus spp. |
| CrylllB2 | Otiorhynchus spp. |
| CrylllB2 | Aleurothrixus spp. |
| CrylllB2 | Aleyrodes spp. |
| CrylllB2 | Aonidiella spp. |
| CrylllB2 | Aphididae spp. |
| CrylllB2 | Aphis spp. |
| CrylllB2 | Bemisia tabaci |
| CrylllB2 | Empoasca spp. |
| CrylllB2 | Mycus spp. |
| CrylllB2 | Nephotettix spp. |
| CrylllB2 | Nilaparvata spp. |
| CrylllB2 | Pseudococcus spp. |
| CrylllB2 | Psylla spp. |
| CrylllB2 | Quadraspidiotus spp. |
| CrylllB2 | Schizaphis spp. |
| CrylllB2 | Trialeurodes spp. |
| CrylllB2 | Lyriornyza spp. |
| CrylllB2 | Oscinella spp. |
| CrylllB2 | Phorbia spp. |
| CrylllB2 | Frankliniella spp. |
| CrylllB2 | Thrips spp. |
| CrylllB2 | Scirtothrips aurantii |
| CrylllB2 | Aceria spp. |
| CrylllB2 | Acutus spp. |
| CrylllB2 | Brevipalpus spp. |
| CrylllB2 | Panonychus spp. |
| CrylllB2 | Phyllocoptruta spp. |
| CrylllB2 | Tetranychus spp. |
| CrylllB2 | Heterodera spp. |
| CrylllB2 | Meloidogyne spp. |
| CytA | Adoxophyes spp. |
| CytA | Agrotis spp. |
| CytA | Alabama argiilaceae |
| CytA | Anticarsia gemmatalis |
| CytA | Chilo spp. |
| CytA | Clysia ambiguella |
| CytA | Crocidolomia binotaiis |
| CytA | Cydia spp. |
| CytA | Diparopsis castanea |
| CytA | Earias spp. |
| CytA | Ephestia spp. |
| CytA | Heliothis spp. |
| CytA | Hellula undalis |
| CytA | Keiferia lycopersicella |
| CytA | Leucoptera scitelia |
| CytA | Lithocollethis spp. |
| CytA | Lobesia botrana |
| CytA | Ostrinia nubilalis |
| CytA | Pandemis spp. |
| CytA | Pectinophora gossyp. |
| CytA | Phyllocnistis citrella |
| CytA | Pieris spp. |
| CytA | Plutella xylostella |
| CytA | Scirpophaga spp. |
| CytA | Sesamia spp. |
| CytA | Sparganothis spp. |
| CytA | Spodoptera spp. |
| CytA | Tortrix spp. |
| CytA | Trichoplusia ni |
| CytA | Agriotes spp. |
| CytA | Anthonomus grandis |
| CytA | Curculio spp. |
| CytA | Diabrotica balteata |
| CytA | Leptinotarsa spp. |
| CytA | Lissorhoptrus spp. |
| CytA | Otiorhynchus spp. |
| CytA | Aleurothrixus spp. |
| CytA | Aleyrodes spp. |
| CytA | Aonidielia spp. |
| CytA | Aphididae spp. |
| CytA | Aphis spp. |
| CytA | Bemisia tabaci |
| CytA | Empoasca spp. |
| CytA | Mycus spp. |
| CytA | Nephotettix spp. |
| CytA | Nilaparvata spp. |
| CytA | Pseudococcus spp. |
| CytA | Psylla spp. |
| CytA | Quadraspidiotus spp. |
| CytA | Schizaphis spp. |
| CytA | Trialeurodes spp. |
| CytA | Lyriomyza spp. |
| CytA | Oscinella spp. |
| CytA | Phorbia spp. |
| CytA | Frankliniella spp. |
| CytA | Thrips spp. |
| CytA | Scirtothrips aurantii |
| CytA | Aceria spp. |
| CytA | Acutus spp. |
| CytA | Brevipalpus spp. |
| CytA | Panonychus spp. |
| CytA | Phyllocoptruta spp. |
| CytA | Tetranychus spp. |
| CytA | Heterodera spp. |
| CytA | Meloidogyne spp. |
| VIP3 | Adoxophyes spp. |
| VIP3 | Agrotis spp. |
| VIP3 | Alabama argillaceae |
| VIP3 | Anticarsia gemmatalis |
| VIP3 | Chilo spp. |
| VIP3 | Clysia ambiguella |
| VIP3 | Crocidolomia binotalis |
| VIP3 | Cydia spp. |
| VIP3 | Diparopsis castanea |
| VIP3 | Earias spp. |
| VIP3 | Ephestia spp. |
| VIP3 | Heliothis spp. |
| VIP3 | Hellula undalis |
| VIP3 | Keiferia lycopersicella |
| VIP3 | Leucoptera scitella |
| VIP3 | Lithocollethis spp. |
| VIP3 | Lobesia botrana |
| VIP3 | Ostrinia nubilalis |
| VIP3 | Pandemis spp. |
| VIP3 | Pectinophora gossyp. |
| VIP3 | Phyllocnistis citrella |
| VIP3 | Pieris spp. |
| VIP3 | Piutella xylostella |
| VIP3 | Scirpophaga spp. |
| VIP3 | Sesamia spp. |
| VIP3 | Sparganothis spp. |
| VIP3 | Spodoptera spp. |
| VIP3 | Tortrix spp. |
| VIP3 | Trichoplusia ni |
| VIP3 | Agriotes spp. |
| VIP3 | Anthonomus grandis |
| VIP3 | Curculio spp. |
| VIP3 | Diabrotica balteata |
| VIP3 | Leptinotarsa spp. |
| VIP3 | Lissorhoptrus spp. |
| VIP3 | Otiorhynchus spp. |
| VIP3 | Aleurothrixus spp. |
| VIP3 | Aleyrodes spp. |
| VIP3 | Aonidiella spp. |
| VIP3 | Aphididae spp. |
| VIP3 | Aphis spp. |
| VIP3 | Bemisia tabaci |
| VIP3 | Empoasca spp. |
| VIP3 | Mycus spp. |
| VIP3 | Nephotettix spp. |
| VIP3 | Niiaparvata spp. |
| VIP3 | Pseudococcus spp. |
| VIP3 | Psylla spp. |
| VIP3 | Quadraspidiotus spp. |
| VIP3 | Schizaphis spp. |
| VIP3 | Trialeurodes spp. |
| VIP3 | Lyriomyza spp. |
| VIP3 | Oscinella spp. |
| VIP3 | Phorbia spp. |
| VIP3 | Frankliniella spp. |
| VIP3 | Thrips spp. |
| VIP3 | Scirtothrips aurantii |
| VIP3 | Aceria spp. |
| VIP3 | Acutus spp. |
| VIP3 | Brevipalpus spp. |
| VIP3 | Panonychus spp. |
| VIP3 | Phyllocoptruta spp. |
| VIP3 | Tetranychus spp. |
| VIP3 | Heterodera spp. |
| VIP3 | Meloidogyne spp. |
| GL | Adoxophyes spp. |
| GL | Agrotis spp. |
| GL | Alabama argillaceae |
| GL | Anticarsia gemmatalis |
| GL | Chilo spp. |
| GL | Clysia ambiguella |
| GL | Crocidolomia binotaiis |
| GL | Cydia spp. |
| GL | Diparopsis castanea |
| GL | Earias spp. |
| GL | Ephestia spp. |
| GL | Heliothis spp. |
| GL | Hellula undalis |
| GL | Keiferia lycopersicella |
| GL | Leucoptera scitella |
| GL | Lithocollethis spp. |
| GL | Lobesia botrana |
| GL | Ostrinia nubilalis |
| GL | Pandemis spp. |
| GL | Pectinophora gossyp. |
| GL | Phyliocnistis citrella |
| GL | Pieris spp. |
| GL | Plutella xylostella |
| GL | Scirpophaga spp. |
| GL | Sesamia spp. |
| GL | Sparganothis spp. |
| GL | Spodoptera spp. |
| GL | Tortrix spp. |
| GL | Trichoplusia ni |
| GL | Agriotes spp. |
| GL | Anthonomus grandis |
| GL | Curculio spp. |
| GL | Diabrotica balteata |
| GL | Leptinotarsa spp. |
| GL | Lissorhoptrus spp. |
| GL | Otiorhynchus spp. |
| GL | Aleurothrixus spp. |
| GL | Aleyrodes spp. |
| GL | Aonidiella spp. |
| GL | Aphididae spp. |
| GL | Aphis spp. |
| GL | Bemisia tabaci |
| GL | Empoasca spp. |
| GL | Mycus spp. |
| GL | Nephotettix spp. |
| GL | Nilaparvata spp. |
| GL | Pseudococcus spp. |
| GL | Psylia spp. |
| GL | Quadraspidiotus spp. |
| GL | Schizaphis spp. |
| GL | Trialeurodes spp. |
| GL | Lyriomyza spp. |
| GL | Oscinella spp. |
| GL | Phorbia spp. |
| GL | Frankliniella spp. |
| GL | Thrips spp. |
| GL | Scirtothrips aurantii |
| GL | Aceria spp. |
| GL | Aculus spp. |
| GL | Brevipalpus spp. |
| GL | Panonychus spp. |
| GL | Phyliocoptruta spp. |
| GL | Tetranychus spp. |
| GL | Heterodera spp. |
| GL | Meioidogyne spp. |
| PL | Adoxophyesspp. |
| PL | Agrotis spp. |
| PL | Alabama argillaceae |
| PL | Anticarsia gemmatalis |
| PL | Chilo spp. |
| PL | Clysia ambiguella |
| PL | Crocidolomia binotalis |
| PL | Cydia spp. |
| PL | Diparopsis castanea |
| PL | Earias spp. |
| PL | Ephestia spp. |
| PL | Heliothis spp. |
| PL | Hellula undaiis |
| PL | Keiferia lycopersicella |
| PL | Leucoptera scitella |
| PL | Lithocollethis spp. |
| PL | Lobesia botrana |
| PL | Ostrinia nubilalis |
| PL | Pandemis spp. |
| PL | Pectinophora gossyp. |
| PL | Phyllocnistis citrella |
| PL | Pieris spp. |
| PL | Plutella xylostella |
| PL | Scirpophaga spp. |
| PL | Sesamia spp. |
| PL | Sparganothis spp. |
| PL | Spodoptera spp. |
| PL | Tortrix spp. |
| PL | Trichoplusia ni |
| PL | Agriotes spp. |
| PL | Anthonomus grandis |
| PL | Curculio spp. |
| PL | Diabrotica balteata |
| PL | Leptinotarsa spp. |
| PL | Lissorhoptrus spp. |
| PL | Otiorhynchus spp. |
| PL | Aleurothrixus spp. |
| PL | Aleyrodes spp. |
| PL | Aonidiella spp. |
| PL | Aphididae spp. |
| PL | Aphis spp. |
| PL | Bemisia tabaci |
| PL | Empoasca spp. |
| PL | Mycus spp. |
| PL | Nephotettix spp. |
| PL | Nilaparvata spp. |
| PL | Pseudococcus spp. |
| PL | Psylla spp. |
| PL | Quadraspidiotus spp. |
| PL | Schizaphis spp. |
| PL | Trialeurodes spp. |
| PL | Lyriomyza spp. |
| PL | Oscinella spp. |
| PL | Phorbia spp. |
| PL | Franklinieila spp. |
| PL | Thrips spp. |
| PL | Scirtothrips auranii |
| PL | Aceria spp. |
| PL | Aculus spp. |
| PL | Brevipalpus spp. |
| PL | Panonychus spp. |
| PL | Phyllocoptruta spp. |
| PL | Tetranychus spp. |
| PL | Heterodera spp. |
| PL | Meloidogyne spp. |
| XN | Adoxophyes spp. |
| XN | Agrotis spp. |
| XN | Alabama argiliaceae |
| XN | Anticarsia gemmatalis |
| XN | Chilo spp. |
| XN | Clysia ambiguella |
| XN | Crocidolomia binotalis |
| XN | Cydia spp. |
| XN | Diparopsis castanea |
| XN | Earias spp. |
| XN | Ephestia spp. |
| XN | Heliothis spp. |
| XN | Helluia undaiis |
| XN | Keiferia lycopersicella |
| XN | Leucoptera scitella |
| XN | Lithocollethis spp. |
| XN | Lobesia botrana |
| XN | Ostrinia nubilalis |
| XN | Pandemis spp. |
| XN | Pectinophora gossyp. |
| XN | Phyllocnistis citrella |
| XN | Pieris spp. |
| XN | Plutella xylostella |
| XN | Scirpophaga spp. |
| XN | Sesamia spp. |
| XN | Sparganothis spp. |
| XN | Spodoptera spp. |
| XN | Tortrix spp. |
| XN | Trichoplusia ni |
| XN | Agriotes spp. |
| XN | Anthonomus grandis |
| XN | Curculio spp. |
| XN | Diabrotica balteata |
| XN | Leptinotarsa spp. |
| XN | Lissorhoptrus spp. |
| XN | Otiorhynchus spp. |
| XN | Aleurothrixus spp. |
| XN | Aleyrodes spp. |
| XN | Aonidiella spp. |
| XN | Aphididae spp. |
| XN | Aphis spp. |
| XN | Bemisia tabaci |
| XN | Empoasca spp. |
| XN | Mycus spp. |
| XN | Nephotettix spp. |
| XN | Nilaparvata spp. |
| XN | Pseudococcus spp. |
| XN | Psylla spp. |
| XN | Quadraspidiotus spp. |
| XN | Schizaphis spp. |
| XN | Trialeurodes spp. |
| XN | Lyriomyza spp. |
| XN | Oscinella spp. |
| XN | Phorbia spp. |
| XN | Frankliniella spp. |
| XN | Thrips spp. |
| XN | Scirtothrips aurantii |
| XN | Aceria spp. |
| XN | Aculus spp. |
| XN | Brevipalpus spp. |
| XN | Panonychus spp. |
| XN | Phyllocoptruta spp. |
| XN | Tetranychus spp. |
| XN | Heterodera spp. |
| XN | Meloidogyne spp. |
| Plnh. | Adoxophyes spp. |
| Plnh. | Agrotis spp. |
| Plnh. | Alabama argiliaceae |
| Plnh. | Anticarsia gemmatalis |
| Plnh. | Chilo spp. |
| Plnh. | Clysia ambiguella |
| Plnh. | Crocidolomia |
| | binotalis |
| Plnh. | Cydia spp. |
| Plnh. | Diparopsis castanea |
| Plnh. | Earias spp. |
| Plnh. | Ephestia spp. |
| Plnh. | Heliothis spp. |
| Plnh. | Heliuia undalis |
| Plnh. | Keiferia lycopersicella |
| Plnh. | Leucoptera scitella |
| Plnh. | Lithocollethis spp. |
| Plnh. | Lobesia botrana |
| Plnh. | Ostrinia nubilalis |
| Plnh. | Pandemis spp. |
| Plnh. | Pectinophora gossyp. |
| Plnh. | Phyllocnistis citrelia |
| Plnh. | Pieris spp. |
| Plnh. | Plutella xylostella |
| Plnh. | Scirpophaga spp. |
| Plnh. | Sesamia spp. |
| Plnh. | Sparganothis spp. |
| Plnh. | Spodoptera spp. |
| Plnh. | Tortrix spp. |
| Plnh. | Trichoplusia ni |
| Plnh. | Agriotes spp. |
| Plnh. | Anthonomus grandis |
| Plnh. | Curculio spp. |
| Plnh. | Diabrotica balteata |
| Plnh. | Leptinotarsa spp. |
| Plnh. | Lissorhoptrus spp. |
| Plnh. | Otiorhynchus spp. |
| Plnh. | Aleurothrixus spp. |
| Plnh. | Aleyrodes spp. |
| Plnh. | Aonidiella spp. |
| Plnh. | Aphididae spp. |
| Plnh. | Aphis spp. |
| Plnh. | Bemisia tabaci |
| Plnh. | Empoasca spp. |
| Plnh. | Mycus spp. |
| Plnh. | Nephotettix spp. |
| Plnh. | Nilaparvata spp. |
| Plnh. | Pseudococcus spp. |
| Plnh. | Psylla spp. |
| Plnh. | Quadraspidiotus spp. |
| Plnh. | Schizaphis spp. |
| Plnh. | Trialeurodes spp. |
| Plnh. | Lyriomyza spp. |
| Plnh. | Oscinella spp. |
| Plnh. | Phorbia spp. |
| Plnh. | Frankliniella spp. |
| Plnh. | Thrips spp. |
| Plnh. | Scirtothrips aurantii |
| Plnh. | Aceria spp. |
| Plnh. | Acutus spp. |
| Plnh. | Brevipalpus spp. |
| Plnh. | Panonychus spp. |
| Plnh. | Phyllocoptruta spp. |
| Plnh. | Tetranychus spp. |
| Plnh. | Heterodera spp. |
| Plnh. | Meloidogyne spp. |
| PLec. | Adoxophyes spp. |
| PLec. | Agrotis spp. |
| PLec. | Alabama argillaceae |
| PLec. | Anticarsia gemmatalis |
| PLec. | Chilo spp. |
| PLec. | Clysia ambiguella |
| PLec. | Crocidolomia binotalis |
| PLec. | Cydia spp. |
| PLec. | Diparopsis castanea |
| PLec. | Earias spp. |
| PLec. | Ephestia spp. |
| PLec. | Heliothis spp. |
| PLec. | Hellula undalis |
| PLec. | Keiferia lycopersicella |
| PLec. | Leucoptera scitella |
| PLec. | Lithocollethis spp. |
| PLec. | Lobesia botrana |
| PLec. | Ostrinia nubilalis |
| PLec. | Pandemis spp. |
| PLec. | Pectinophora gossyp. |
| PLec. | Phyllocnistis citrella |
| PLec. | Pieris spp. |
| PLec. | Plutella xylostella |
| PLec. | Scirpophaga spp. |
| PLec. | Sesamia spp. |
| PLec. | Sparganothis spp. |
| PLec. | Spodoptera spp. |
| PLec. | Tortrix spp. |
| PLec. | Trichoplusia ni |
| PLec. | Agriotes spp. |
| PLec. | Anthonomus grandis |
| PLec. | Curculio spp. |
| PLec. | Diabrotica balteata |
| PLec. | Leptinotarsa spp. |
| PLec. | Lissorhoptrus spp. |
| PLec. | Otiorhynchus spp. |
| PLec. | Aleurothrixus spp. |
| PLec. | Aleyrodes spp. |
| PLec. | Aonidiella spp. |
| PLec. | Aphididae spp. |
| PLec. | Aphis spp. |
| PLec. | Bemisia tabaci |
| PLec. | Empoasca spp. |
| PLec. | Mycus spp. |
| PLec. | Nephotettix spp. |
| PLec. | Nilaparvata spp. |
| PLec. | Pseudococcus spp. |
| PLec. | Psylia spp. |
| PLec. | Quadraspidiotus spp. |
| PLec. | Schizaphis spp. |
| PLec. | Trialeurodes spp. |
| PLec. | Lyriomyza spp. |
| PLec. | Oscinella spp. |
| PLec. | Phorbia spp. |
| PLec. | Frankliniella spp. |
| PLec. | Thrips spp. |
| PLec. | Scirtothnps aurantii |
| PLec. | Aceria spp. |
| PLec. | Aculus spp. |
| PLec. | Brevipalpus spp. |
| PLec. | Panonychus spp. |
| PLec. | Phyllocoptruta spp. |
| PLec. | Tetranychus spp. |
| PLec. | Heterodera spp. |
| PLec. | Meloidogyne spp. |
| Aggl. | Adoxophyes spp. |
| Aggl. | Agrotis spp. |
| Aggl. | Alabama |
| | argillaceae |
| Aggl. | Anticarsia gemmatalis |
| Aggl. | Chilo spp. |
| Aggl. | Clysia ambiguella |
| Aggl. | Crocidolomia |
| | binotalis |
| Aggl. | Cydia spp. |
| Aggl. | Diparopsis |
| | castanea |
| Aggl. | Earias spp. |
| Aggl. | Ephestia spp. |
| Aggl. | Heliothis spp. |
| Aggl. | Hellula undalis |
| Aggl. | Keiferia |
| | lycopersicella |
| Aggl. | Leucoptera scitella |
| Aggl. | Lithocollethis spp. |
| Aggl. | Lobesia botrana |
| Aggl. | Ostrinia nubilalis |
| Aggl. | Pandemis spp. |
| Aggl. | Pectinophora |
| | gossyp. |
| Aggl. | Phyllocnistis citrella |
| Aggl. | Pieris spp. |
| Aggl. | Plutiia xylostella |
| Aggl. | Scirpophaga spp. |
| Aggl. | Sesamia spp. |
| Aggl. | Sparganothis spp. |
| Aggl. | Spodoptera spp. |
| Aggl. | Tortrix spp. |
| Aggl. | Trichoplusia ni |
| Aggl. | Agriotes spp. |
| Aggl. | Anthonomus grandis |
| Aggl. | Curculio spp. |
| Aggl. | Diabrotica balteata |
| Aggl. | Leptinotarsa spp. |
| Aggl. | Lissorhoptrus spp. |
| Aggl. | Otiorhynchus spp. |
| Aggl. | Aleurothrixus spp. |
| Aggl. | Aleyrodes spp. |
| Aggl. | Aonidiella spp. |
| Aggl. | Aphididae spp. |
| Aggl. | Aphis spp. |
| Aggl. | Bemisia tabaci |
| Aggl. | Empoasca spp. |
| Aggl. | Mycus spp. |
| Aggl. | Nephotettix spp. |
| Aggl. | Nilaparvata spp. |
| Aggl. | Pseudococcus spp. |
| Aggl. | Psylla spp. |
| Aggl. | Quadraspidiotus spp. |
| Aggl. | Schizaphis spp. |
| Aggl. | Trialeurodes spp. |
| Aggl. | Lyriomyza spp. |
| Aggl. | Oscinella spp. |
| Aggl. | Phorbia spp. |
| Aggl. | Frankliniella spp. |
| Aggl. | Thrips spp. |
| Aggl. | Scirtothrips auranti |
| Aggl. | Aceria spp. |
| Aggl. | Aculus spp. |
| Aggl. | Brevipalpus spp. |
| Aggl. | Panonychus spp. |
| Aggl. | Phyllocoptruta spp |
| Aggl. | Tetranychus spp. |
| Aggl. | Heterodera spp. |
| Aggl. | Meloidogyne spp. |
| CO | Adoxophyes spp. |
| CO | Agrotis spp. |
| CO | Alabama argiliaceae |
| CO | Anticarsia gemmatalis |
| CO | Chilo spp. |
| CO | Ciysia ambiguella |
| CO | Crocidolomia binotalis |
| CO | Cydia spp. |
| CO | Diparopsis castanea |
| CO | Earias spp. |
| CO | Ephestia spp. |
| CO | Heliothis spp. |
| CO | Hellula undalis |
| CO | Keiferia lycopersicella |
| CO | Leucoptera scitella |
| CO | Lithocollethis spp. |
| CO | Lobesia botrana |
| CO | Ostrinia nubilalis |
| CO | Pandemis spp. |
| CO | Pectinophora gossyp. |
| CO | Phyllocnistis citrella |
| CO | Pieris spp. |
| CO | Plutella xylostella |
| CO | Scirpophaga spp. |
| CO | Sesamia spp. |
| CO | Sparganothis spp. |
| CO | Spodoptera spp. |
| CO | Tortrix spp. |
| CO | Trichoplusia ni |
| CO | Agriotes spp. |
| CO | Anthonomus grandis |
| CO | Curculio spp. |
| CO | Diabrotica balteata |
| CO | Leptinotarsa spp. |
| CO | Lissorhoptrus spp. |
| CO | Otiorhynchus spp. |
| CO | Aleurothrixus spp. |
| CO | Aleyrodes spp. |
| CO | Aonidielia spp. |
| CO | Aphididae spp. |
| CO | Aphis spp. |
| CO | Bemisia tabaci |
| CO | Empoasca spp. |
| CO | Mycus spp. |
| CO | Nephotettix spp. |
| CO | Nilaparvata spp. |
| CO | Pseudococcus spp. |
| CO | Psylla spp. |
| CO | Quadraspidiotus spp. |
| CO | Schizaphis spp. |
| CO | Trialeurodes spp. |
| CO | Lyriomyza spp. |
| CO | Oscinella spp. |
| CO | Phorbia spp. |
| CO | Frankliniella spp. |
| CO | Thrips spp. |
| CO | Scirtothrips aurantii |
| CO | Aceria spp. |
| CO | Acutus spp. |
| CO | Brevipalpus spp. |
| CO | Panonychus spp. |
| CO | Phyllocoptruta spp. |
| CO | Tetranychus spp. |
| CO | Heterodera spp. |
| CO | Meloidogyne spp. |
| CH | Adoxophyes spp. |
| CH | Agrotis spp. |
| CH | Alabama argillaceae |
| CH | Anticarsia |
| | gemmatalis |
| CH | Chilo spp. |
| CH | Clysia ambiguella |
| CH | Crocidolomia binotalis |
| CH | Cydia spp. |
| CH | Diparopsis castanea |
| CH | Earias spp. |
| CH | Ephestia spp. |
| CH | Heliothis spp. |
| CH | Hellula undalis |
| CH | Keiferia lycopersicella |
| CH | Leucoptera scitella |
| CH | Lithocollethis spp. |
| CH | Lobesia botrana |
| CH | Ostrinia nubilalis |
| CH | Pandemis spp. |
| CH | Pectinophora gossyp. |
| CH | Phyllocnistis citrella |
| CH | Pieris spp. |
| CH | Plutella xylostella |
| CH | Scirpophaga spp. |
| CH | Sesamia spp. |
| CH | Sparganothis spp. |
| CH | Spodoptera spp. |
| CH | Tortrix spp. |
| CH | Trichoplusia ni |
| CH | Agriotes spp. |
| CH | Anthonomus |
| | grandis |
| CH | Curculio spp. |
| CH | Diabrotica balteata |
| CH | Leptinotarsa spp. |
| CH | Lissorhoptrus spp. |
| CH | Otiorhynohus spp. |
| CH | Aleurothrixus spp. |
| CH | Aleyrodes spp. |
| CH | Aonidiella spp. |
| CH | Aphididae spp. |
| CH | Aphis spp. |
| CH | Bemisia tabaci |
| CH | Empoasca spp. |
| CH | Mycus spp. |
| CH | Nephotettix spp. |
| CH | Nilaparvata spp. |
| CH | Pseudococcus spp. |
| CH | Psylla spp. |
| CH | Quadraspidiotus spp. |
| CH | Schizaphis spp. |
| CH | Trialeurodes spp. |
| CH | Lyriomyza spp. |
| CH | Oscinella spp. |
| CH | Phorbia spp. |
| CH | Frankliniella spp. |
| CH | Thrips spp. |
| CH | Scirtothrips aurantii |
| CH | Aceria spp. |
| CH | Aculus spp. |
| CH | Brevipalpus spp. |
| CH | Panonychus spp. |
| CH | Phyllocoptruta spp. |
| CH | Tetranychus spp. |
| CH | Heterodera spp. |
| CH | Meloidogyne spp. |
| SS | Adoxophyes spp. |
| SS | Agrotis spp. |
| SS | Alabama argillaceae |
| SS | Anticarsia gemmatalis |
| SS | Chilo spp. |
| SS | Clysia ambiguella |
| SS | Crocidolomia binotalis |
| SS | Cydia spp. |
| SS | Diparopsis castanea |
| SS | Earias spp. |
| SS | Ephestia spp. |
| SS | Heliothis spp. |
| SS | Hellula undalis |
| SS | Keiferia lycopersicella |
| SS | Leucoptera scitella |
| SS | Lithocollethis spp. |
| SS | Lobesia botrana |
| SS | Ostrinia nubilalis |
| SS | Pandemis spp. |
| SS | Pectinophora gossyp. |
| SS | Phyllocnistis citrella |
| SS | Pieris spp. |
| SS | Plutella xylostella |
| SS | Scirpophaga spp. |
| SS | Sesamia spp. |
| SS | Sparganothis spp. |
| SS | Spodoptera spp. |
| SS | Tortrix spp. |
| SS | Trichopiusia ni |
| SS | Agriotes spp. |
| SS | Anthonomus grandis |
| SS | Curculio spp. |
| SS | Diabrotica balteata |
| SS | Leptinotarsa spp. |
| SS | Lissorhoptrus spp. |
| SS | Otiorhynchus spp. |
| SS | Aleurothrixus spp. |
| SS | Aleyrodes spp. |
| SS | Aonidielia spp. |
| SS | Aphididae spp. |
| SS | Aphis spp. |
| SS | Bemisia tabaci |
| SS | Empoasca spp. |
| SS | Mycus spp. |
| SS | Nephotettix spp. |
| SS | Nilaparvata spp. |
| SS | Pseudococcus spp. |
| SS | Psylla spp. |
| SS | Quadraspidiotus spp. |
| SS | Schizaphis spp. |
| SS | Trialeurodes spp. |
| SS | Lyriomyza spp. |
| SS | Oscinella spp. |
| SS | Phorbia spp. |
| SS | Frankliniella spp. |
| SS | Thrips spp. |
| SS | Scirtothrips aurantii |
| SS | Aceria spp. |
| SS | Aculus spp. |
| SS | Brevipalpus spp. |
| SS | Panonychus spp. |
| SS | Phyllocoptruta spp. |
| SS | Tetranychus spp. |
| SS | Heterodera spp. |
| SS | Meloidogyne spp. |
| HO | Adoxophyes spp. |
| HO | Agrotis spp. |
| HO | Alabama argillaceae |
| HO | Anticarsia gemmatalis |
| HO | Chilo spp. |
| HO | Clysia ambiguella |
| HO | Crocidolomia binotalis |
| HO | Cydia spp. |
| HO | Diparopsis castanea |
| HO | Earias spp. |
| HO | Ephestia spp. |
| HO | Heliothis spp. |
| HO | Hellula undalis |
| HO | Keiferia lycopersicella |
| HO | Leucoptera scitella |
| HO | Lithocollethis spp. |
| HO | Lobesia botrana |
| HO | Ostrinia nubilalis |
| HO | Pandemis spp. |
| HO | Pectinophora gossypiella |
| HO | Phyllocnistis citrella |
| HO | Pieris spp. |
| HO | Plutella xylostella |
| HO | Scirpophaga spp. |
| HO | Sesamia spp. |
| HO | Sparganothis spp. |
| HO | Spodoptera spp. |
| HO | Tortrix spp. |
| HO | Trichoplusia ni |
| HO | Agriotes spp. |
| HO | Anthonomus grandis |
| HO | Curculio spp. |
| HO | Diabrotica balteata |
| HO | Leptinotarsa spp. |
| HO | Lissorhoptrus spp. |
| HO | Otiorhynchus spp. |
| HO | Aleurothrixus spp. |
| HO | Aleyrodes spp. |
| HO | Aonidiella spp. |
| HO | Aphididae spp. |
| HO | Aphis spp. |
| HO | Bemisia tabaci |
| HO | Empoasca spp. |
| HO | Mycus spp. |
| HO | Nephotettix spp. |
| HO | Nilaparvata spp. |
| HO | Pseudococcus spp. |
| HO | Psylla spp. |
| HO | Quadraspidiotus spp. |
| HO | Schizaphis spp. |
| HO | Trialeurodes spp. |
| HO | Lyriomyza spp. |
| HO | Oscinella spp. |
| HO | Phorbia spp. |
| HO | Frankliniella spp. |
| HO | Thrips spp. |
| HO | Scirtothrips aurantii |
| HO | Aceria spp. |
| HO | Acutus spp. |
| HO | Brevipalpus spp. |
| HO | Panonychus spp. |
| HO | Phyllocoptruta spp. |
| HO | Tetranychus spp. |
| HO | Heterodera spp. |
| HO | Meloidogyne spp. |

**Tabelle 3:**

| Abkürzungen: | | |
|---|---|---|
| Acetyl-CoA-Carboxylase: ACCase | | |
| Acetolactatsynthase: ALS | | |
| Hydroxyphenylpyruvat-Dioxygenase: HPPD | | |
| Hemmung der Proteinsynthese: IPS | | |
| Hormonimitation: HO | | |
| Glutaminsynthetase: GS | | |
| Protoporphyrinogenoxidase: PROTOX | | |
| 5-Enolpyruvyl-3-Phosphoshikimat-Synthase: EPSPS | | |
| | | |

| Prinzip | Toleranz gegenüber | Pflanze |
|---|---|---|
| ALS | Sulfonylharnstoffverbin-dungen usw.*** | Baumwolle |
| ALS | Sulfonylharnstoffverbin-dungen usw. *** | Reis |
| ALS | Sulfonylharnstoffverbin-dungen usw. *** | Brassica |
| ALS | Sulfonylharnstoffverbin-dungen usw. *** | Kartoffeln |
| ALS | Sulfonylharnstoffverbin-dungen usw. *** | Tomaten |
| ALS | Sulfonylharnstoffverbin-dungen usw. *** | Kürbis |
| ALS | Sulfonylharnstoffverbin-dungen usw. *** | Sojabohnen |
| ALS | Sulfonylharnstoffverbin-dungen usw. *** | Mais |
| ALS | Sulfonylharnstoffverbin-dungen usw. *** | Weizen |
| ALS | Sulfonylharnstoffver-bindungen usw. *** | Kernobst |
| ALS | Sulfonylharnstoffver-bindungen usw. *** | Steinobst |
| ALS | Sulfonylharnstoffver-bindungen usw. *** | Zitrus |
| ACCase | +++ | Baumwolle |
| ACCase | +++ | Reis |
| ACCase | +++ | Brassica |
| ACCase | +++ | Kartoffel |
| ACCase | +++ | Tomaten |
| ACCase | +++ | Kürbis |
| ACCase | +++ | Sojabohnen |
| ACCase | +++ | Mais |
| ACCase | +++ | Weizen |
| ACCase | +++ | Kernobst |
| ACCase | +++ | Steinobst |
| ACCase | +++ | Zitrus |
| HPPD | Isoxaflutol, Isoxachlotol, Sulcotrion, Mesotrion | Baumwolle |
| HPPD | Isoxaflutol, Isoxachlotol, Sulcotrion, Mesotrion | Reis |
| HPPD | Isoxaflutol, Isoxachlotol, Sulcotrion, Mesotrion | Brassica |
| HPPD | Isoxaflutol, Isoxachlotol, Sulcotrion, Mesotrion | Kartoffeln |
| HPPD | Isoxaflutol, Isoxachlotol, Sulcotrion, Mesotrion | Tomaten |
| HPPD | Isoxaflutol, Isoxachlotol, Sulcotrion, Mesotrion | Kürbis |
| HPPD | Isoxaflutol, Isoxachlotol, Sulcotrion, Mesotrion | Sojabohnen |
| HPPD | Isoxaflutol, Isoxachlotol, Sulcotrion, Mesotrion | Mais |
| HPPD | Isoxaflutol, Isoxachlotol, Sulcotrion, Mesotrion | Weizen |
| HPPD | Isoxaflutol, Isoxachlotol, Sulcotrion, Mesotrion | Kernobst |
| HPPD | Isoxaflutol, Isoxachlotol, Sulcotrion, Mesotrion | Steinobst |
| HPPD | Isoxaflutol, Isoxachlotol, Sulcotrion, Mesotrion | Zitrus |
| Nitrilase | Bromoxynil, Loxynil | Baumwolle |
| Nitrilase | Bromoxynil, Loxynil | Reis |
| Nitrilase | Bromoxynil, Loxynil | Brassica |
| Nitrilase | Bromoxynil, Loxynil | Kartoffeln |
| Nitrilase | Bromoxynil, Loxynil | Tomaten |
| Nitrilase | Bromoxynil, Loxynil | Kürbis |
| Nitrilase | Bromoxynil, Loxynil | Sojabohnen |
| Nitrilase | Bromoxynil, Loxynil | Mais |
| Nitrilase | Bromoxynil, Loxynil | Weizen |
| Nitrilase | Bromoxynil, Loxynil | Kernobst |
| Nitrilase | Bromoxynil, Loxynil | Steinobst |
| Nitrilase | Bromoxynil, Loxynil | Zitrus |
| IPS | Chloroactanilide &&& | Baumwolle |
| IPS | Chloroactanilide &&& | Reis |
| IPS | Chloroactanilid &&& | Brassica |
| IPS | Chloroactanilide &&& | Kartoffeln |
| IPS | Chloroactanilide &&& | Tomaten |
| IPS | Chloroactanilide &&& | Kürbis |
| IPS | Chloroactanilide &&& | Sojabohnen |
| IPS | Chloroactanilide &&& | Mais |
| IPS | Chloroactanilide &&& | Weizen |
| IPS | Chloroactanilide &&& | Kernobst |
| IPS | Chloroactanilide &&& | Steinobst |
| IPS | Chloroactanilide &&& | Zitrus |
| HOM | 2,4-D, Mecoprop-P | Baumwolle |
| HOM | 2,4-D, Mecoprop-P | Reis |
| HOM | 2,4-D, Mecoprop-P | Brassica |
| HOM | 2,4-D, Mecoprop-P | Kartoffeln |
| HOM | 2,4-D, Mecoprop-P | Tomaten |
| HOM | 2,4-D, Mecoprop-P | Kürbis |
| HOM | 2,4-D, Mecoprop-P | Sojabohnen |
| HOM | 2,4-D, Mecoprop-P | Mais |
| HOM | 2,4-D, Mecoprop-P | Weizen |
| HOM | 2,4-D, Mecoprop-P | Kernobst |
| HOM | 2,4-D, Mecoprop-P | Steinobst |
| HOM | 2,4-D, Mecoprop-P | Zitrus |
| PROTOX | Protox-Inhibitoren /// | Baumwolle |
| PROTOX | Protox-Inhibitoren /// | Reis |
| PROTOX | Protox-Inhibitoren /// | Brassica |
| PROTOX | Protox-Inhibitoren /// | Kartoffeln |
| PROTOX | Protox-Inhibitoren /// | Tomaten |
| PROTOX | Protox-Inhibitoren /// | Kürbis |
| PROTOX | Protox-Inhibitoren /// | Sojabohnen |
| PROTOX | Protox-Inhibitoren /// | Mais |
| PROTOX | Protox-Inhibitoren /// | Weizen |
| PROTOX | Protox-Inhibitoren /// | Kernobst |
| PROTOX | Protox-Inhibitoren /// | Steinobst |
| PROTOX | Protox-Inhibitoren /// | Zitrus |
| EPSPS | Glyphosat und/oder Sulphosat | Baumwolle |
| EPSPS | Glyphosat und/oder Sulphosat | Reis |
| EPSPS | Glyphosat und/oder Sulphosat | Brassica |
| EPSPS | Glyphosat und/oder Sulphosat | Kartoffeln |
| EPSPS | Glyphosat und/oder Sulphosat | Tomaten |
| EPSPS | Glyphosat und/oder Sulphosat | Kürbis |
| EPSPS | Glyphosat und/oder Sulphosat | Sojabohnen |
| EPSPS | Glyphosat und/oder Sulphosat | Mais |
| EPSPS | Glyphosat und/oder Sulphosat | Weizen |
| EPSPS | Glyphosat und/oder Sulphosat | Kernobst |
| EPSPS | Glyphosat und/oder Sulphosat | Steinobst |
| EPSPS | Glyphosat und/oder Sulphosat | Zitrus |
| GS | Gluphosinat und/oder Bialaphos | Baumwolle |
| GS | Gluphosinat und/oder Bialaphos | Reis |
| GS | Gluphosinat und/oder Bialaphos | Brassica |
| GS | Gluphosinat und/oder Bialaphos | Kartoffeln |
| GS | Gluphosinat und/oder Bialaphos | Tomaten |
| GS | Gluphosinat und/oder Bialaphos | Kürbis |
| GS | Gluphosinat und/oder Bialaphos | Sojabohnen |
| GS | Gluphosinat und/oder Bialaphos | Mais |
| GS | Gluphosinat und/oder Bialaphos | Weizen |
| GS | Gluphosinat und/oder Bialaphos | Kernobst |
| GS | Gluphosinat und/oder Bialaphos | Steinobst |
| GS | Gluphosinat und/oder Bialaphos | Zitrus |

| | | |
|---|---|---|
| *** einbezogen sind Sulfonylharnstoffverbindungen, Imidazolinone, Triazolpyrimidine, Dimethoxypyrimidine und N-Acylsulfonamide: | | |

Sulfonylharnstoffverbindungen wie Chlorsulfuron, Chlorimuron, Ethamethsulfuron, Metsulfuron, Primisulfuron, Prosulfuron, Triasulfuron, Cinosulfuron, Trifusulfuron, Oxasulfuron, Bensulfuron, Tribenuron, ACC 322140, Fluzasulfuron, Ethoxysulfuron, Fluzasdulfuron, Nicosulfuron, Rimsulfuron, Thifensulfuron, Pyrazosulfuron, Clopyrasulfuron, NC 330, Azimsulfuron, Imazosulfuron, Sulfosulfuron, Amidosulfuron, Flupyrsulfuron, CGA 362622
Imidazolinone wie Imazamethabenz, Imazaquin, Imazamethypyr, Imazethapyr, Imazapyr und Imazamox;
Triazolpyrimidine wie DE 511, Flumetsulam und Chloransulam;
Dimethoxypyrimidine wie etwa Pyrithiobac, Pyriminobac, Bispyribac und Pyribenzoxim.
+++ Tolerant gegenüber Diclofop-methyl, Fluazifop-P-butyl, Haloxyfop-P-methyl, Haloxyfop-P-ethyl, Quizalafop-P-ethyl, Clodinafop-propargyl, Fenoxaprop-ethyl, Tepraloxydim, Alloxydim, Sethoxydim, Cycloxydim, Cloproxydim, Tralkoxydim, Butoxydim, Caloxydim, Clefoxydim, Clethodim.
&&& Chloroacetanilide wie etwa Alachlor, Acetochlor, Dimethenamid
/// Protox-Inhibitoren: Zum Beispiel Diphenyether wie etwa Acifluorfen, Aclonifen, Bifenox, Chlornitrofen, Ethoxyfen, Fluoroglycofen, Fomesafen, Lactofen, Oxyfluorfen; Imide wie etwa Azafenidin, Carfentrazone-ethyl, Cinidon-ethyl, Flumiclorac-pentyl, Flumioxazin, Fluthiacet-methyl, Oxadiargyl, Oxadiazon, Pentoxazone, Sulfentrazone, Imide und andere Verbindungen wie etwa Flumipropyn, Flupropacil, Nipyraclofen and Thidiazimin; sowie Fluazola und Pyraflufenethyl.

**Tabelle 4**

| Liste von Beispielen transgener Pflanzen mit modifizierten Eigenschaften: | |
|---|---|
| Transgene Pflanzen | Transgen modifizierte Eigenschaften |
| Dianthus caryophyllus (Nelke) | Verlängerte Haltbarkeit durch reduzierte Ethylen-Akkumulation aufgrund der Expression der ACC Synthase; Sulfonylharnstoff-Herbizid Toleranz |
| Linie 66 | |
| [Florigene Pty. Ltd.] | |
| Dianthus caryophyllus (Nelke) | Modifizierte Blütenfarbe; Sulfonylharnstoff-Herbizid Toleranz |
| Linien 4, 11, 15, 16 | |
| [Florigene Pty. Ltd.] | |
| Dianthus caryophyllus (Nelke) | Modifizierte Blütenfarbe; Sulfonylharnstoff-Herbizid Toleranz |
| Linien 959A, 988A, 1226A, 1351A, 1363A, 1400A | |
| [Florigene Pty. Ltd.] | |
| Brassica napus (Argentinischer Raps) | Modifizierter Fettsäuregehalt im Samen |
| Linien 23-18-17, 23-198 | |
| [Monsanto Company] | |
| Zea mays L. (Mais) | Erhöhter Lysingehalt |
| Linien REN-ØØØ38-3 (LY038) | |
| [Monsanto Company] | |
| Zea mays L. (Mais) | Erhöhter Lysingehalt, Resistenz gegen den Maiszünsler; |
| Linien REN-ØØØ38-3, MON-ØØ81Ø-6 (MON-ØØ81Ø-6 x LY038) | |
| [Monsanto Company] | |
| Cucumis melo (Melone) | Verzögerte Reife durch Expression der S-Adenosylmethionin Hydrolase |
| Linien A, B | |
| [Agritope Inc.] | |
| Carica papaya (Papaya) | Resistenz gegen den Papaya Ringspot Virus (PRSV) |
| Linien 55-1/63-1 | |
| [Cornell University] | |
| Solanum tuberosum L. (Kartoffel) | Resistenz gegen den Colorado Kartoffelkäfer und den Kartoffelblattrollvirus (PLRV) |
| Linien RBMT21-129, RBMT21-350, RBMT22-082 | |
| [Monsanto Company] | |
| Solanum tuberosum L. (Kartoffel) | Resistenz gegen den Colorado Kartoffelkäfer und den Kartoffelvirus Y (PVY) |
| Linien RBMT15-101, SEMT15-02, SEMT15-15 | |
| [Monsanto Company] | |
| Glycine max L. (Sojabohne) | Modifizierter Fettsäuregehalt im Samen, insbesondere erhöhter Ölsäuregehalt |
| Linien DD-Ø26ØØ5-3 (G94-1, G94-19, G168 | |
| [DuPont Canada Agricultural Products] | |
| Glycine max L. (Sojabohne) | Modifizierter Fettsäuregehalt im Samen, insbesondere reduzierter Linolensäuregehalt |
| Linien OT96-15 | |
| [Agriculture & Agri-Food Canada] | |
| Cucurbita pepo (Kürbis) | Resistenz gegen virale Infektionen, Wassermelonen Mosaik Virus (WMV) 2 und Zucchini Gelbmosaik Virus (ZYMV) |
| Linie ZW20 | |
| [Upjohn (USA); Seminis Vegetable Inc. (Canada)] | |
| Cucurbita pepo (Kürbis) | Resistenz gegen virale Infektionen, Gurken Mosaik Virus (CMV), Wassermelonen Mosaik Virus (WMV) 2 und Zucchini Gelbmosaik Virus (ZYMV) |
| Linie CZW-3 | |
| [Asgrow (USA); Seminis Vegetable Inc. (Canada)] | |
| Nicotiana tabacum L. (Tabak) | Reduzierter Nikotingehalt |
| Linie Vector 21-41 | |
| [Vector Tobacco] | |
| Lycopersicon esculentum (Tomate) | Verlängerte Haltbarkeit durch reduzierte Ethylen-Akkumulation aufgrund der Expression der ACC Synthase |
| Linie 1345-4 | |
| [DNA Plant Technology] | |
| Lycopersicon esculentum (Tomate) | Verzögerte Reife durch Expression der S-Adenosylmethionin Hydrolase |
| Linie 35 1 N | |
| [Agritope Inc.] | |
| Lycopersicon esculentum (Tomate) | Verzögerte Reife durch Expression von ACCd |
| Linie CGN-89322-3 (8338) | |
| [Monsanto Company] | |
| Lycopersicon esculentum (Tomate) | Verzögertes Weichwerden ("anti-Matsch") durch eine verminderte Expression der Polygalacturonase |
| Linien B, Da, F | |
| [Zeneca Seeds] | |
| Lycopersicon esculentum (Tomate) | Verzögertes Weichwerden ("anti-Matsch") durch eine verminderte Expression der Polygalacturonase |
| Linie CGN-89564-2 (FLAVR SAVR) | |
| [Calgene Inc.] | |

## Patentansprüche

1. Verfahren zur Verstärkung der Wirkung einer Mischung gegen Schädlinge wie in Tabelle 2 für cry1Ab und cry1Ac aufgeführt, **dadurch gekennzeichnet, dass** eine transgene Pflanze mit einer wirksamen Menge einer Mischung aus mindestens einer Verbindung der Formel I 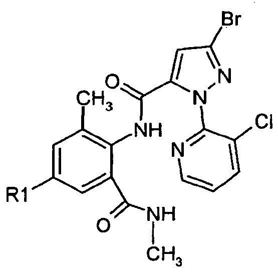 wobei R1 für Chlor oder Cyano steht
und mindestens einer Verbindung der Gruppe II, enthaltend Abamectin oder Spinosad behandelt wird,.
wobei die transgene Pflanze mindestens ein Fremdgen, welches ein BT-Toxin codiert, enthält, **dadurch gekennzeichnet, dass** es sich bei dem Fremdgen um ein Gen oder Genabschnitt der Subfamilien cry1Ab oder cry1Ac handelt.

2. Verfahren nach Anspruch 1 , **dadurch gekennzeichnet, daß** es sich bei der transgenen Pflanze um eine Gemüse-, Mais-, Soja-, Baumwoll-, Tabak-, Reis-, Zuckerrüben- oder Kartoffelpflanze handelt

3. Verfahren nach einem der Ansprüche 1, oder 2, wobei die transgene Pflanze neben den Genen für ein oder mehrere Bt-Toxine Gene zur Expression eines Protease- bzw. Peptidase-Inhibitors, von Herbizidresistenzen gegen Glufosinate oder Glyphosate durch Expression des pat- oder bar-Gens oder zur Ausbildung von Nematoden-, Pilz- oder Virusresistenzen durch Expression einer Glucanase, Chitinase enthalten oder exprimieren.

## Claims

1. Method for enhancing the activity of a mixture against pests as listed in table 2 for cry1Ab and cry1Ac, **characterized in that** a transgenic plant is treated with an effective amount of a mixture comprising at least one compound of the formula I 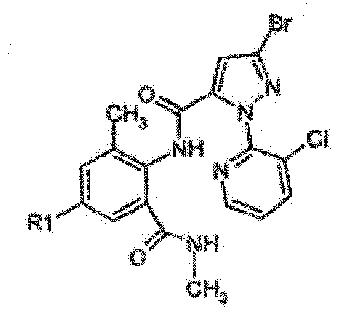 where Rl represents chlorine or cyano
and at least one compound of the group II comprising abamectin and spinosad,
where the transgenic plant comprises at least one foreign gene coding for a Bt toxin, **characterized in that** the foreign gene is a gene or gene section of the subfamilies cry1Ab or cry1Ac.

2. Method according to Claim 1, **characterized in that** the transgenic plant is a vegetable, maize, soya bean, cotton, tobacco, rice, sugar beet or potato plant.

3. Method according to either of Claims 1 and 2 where the transgenic plant comprises or expresses, in addition to the genes for one or more Bt toxins, genes for the expression of a protease or peptidase inhibitor, of herbicide resistances against glufosinate or glyphosate by expression of the pat or bar gene or for developing nematode, fungus or virus resistances by expression of a glucanase and/or chitinase.

## Revendications

1. Procédé pour renforcer l'action d'un mélange contre des ravageurs, telle qu'indiquée dans le tableau 2 pour cry1Ab et cry1Ac, **caractérisé en ce qu**'on traite une plante transgénique par une quantité efficace d'un mélange d'au moins un composé de formule I 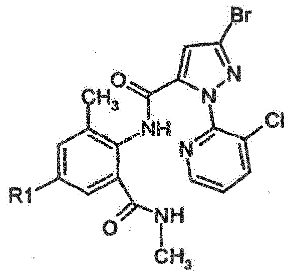 dans laquelle R1 représente un atome de chlore ou le groupe cyano
et d'au moins un composé du groupe II, contenant l'abamectine ou le spinosad,
la plante transgénique contenant au moins un gène étranger qui code pour une toxine de Bt, **caractérisé en ce que** pour ce qui est du gène étranger il s'agit d'un gène ou fragment de gène des sous-famillles cry1Ab ou cry1Ac.

2. Procédé selon la revendication 1, **caractérisé en ce que** pour ce qui est de la plante transgénique il s'agit d'une plante de type légume, maïs, soja, coton, tabac, riz, betterave sucrière ou pomme de terre.

3. Procédé selon l'une quelconque des revendications 1 et 2, dans lequel outre des gènes codant pour une ou plusieurs toxines de Bt, la plante transgénique contient ou exprime des gènes codant pour l'expression d'un inhibiteur de protéase ou de peptidase, de résistance à des herbicides vis-à-vis du glufosinate ou du glyphosate par expression du gène pat ou bar ou pour l'élaboration de résistances à des nématodes, des champignons ou des virus par expression d'une glucanase, d'une chitinase.
